# EUROPEAN PATENT APPLICATION

(11) **EP 4 773 699 A1**
(43) Date of publication of application: **08.07.2026**
(21) Application number: 23950155.4
(22) Date of filing: 30.08.2023
(51) Int. Cl.: H04W 72/1273, H04W 72/1268

(54) **DETERMINATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Gunzelmann, Rainer
(86) International application number: PCT/CN2023/115964
(87) International publication number: WO 2025/043567

(57) **Abstract**

Provided in the present disclosure are a determination method and apparatus, and a device and a storage medium. The method comprises: a network device determining at least one of a first parameter, a second parameter and a third parameter, wherein the first parameter, the second parameter and the third parameter are used for calculating a downlink peak data rate of a reduced capability (Redcap) terminal; and the network device determining at least one of a fourth parameter, a fifth parameter and a sixth parameter, wherein the fourth parameter, the fifth parameter and the sixth parameter are used for calculating an uplink peak data rate of the Redcap terminal. The determination method in the present disclosure may be used by a network device to determine a parameter for calculating uplink and downlink peak data rates of a Redcap terminal, such that the network device can successfully calculate the uplink and downlink peak data rates of the Redcap terminal, and such that the network device subsequently performs uplink and downlink resource scheduling regarding the Redcap terminal, thereby ensuring the accuracy and rationality of resource scheduling.

## Description

### TECHNICAL FIELD

The disclosure relates to a field of communication technologies, in particular to a method and an apparatus for determination, a communication device, a communication system, and a storage medium.

### BACKGROUND

In a communication system, a terminal typically needs to report a capability parameter of the terminal to a network device, so that network device may calculate a peak data rate of the terminal based on the capability parameter reported by the terminal, this allows the network device to subsequently allocate a resource to the terminal based on the peak data rate of the terminal.

### SUMMARY

The present disclosure proposes a method and an apparatus for determination, a communication device, a communication systems, and a storage medium.

According to a first aspect of embodiments of the present disclosure, a method for determination is provided. The method includes at least one of:
determining, by a network device, at least one of a first parameter, a second parameter, or a third parameter, where the first parameter, the second parameter, and the third parameter are used to calculate a downlink peak data rate of a reduced capability (Redcap) terminal; or
determining, by a network device, at least one of a fourth parameter, a fifth parameter, or a sixth parameter, where the fourth parameter, the fifth parameter, and the sixth parameter are used to calculate an uplink peak data rate of a Redcap terminal.

According to a second aspect of embodiments of the present disclosure, a method for determination is provided. The method includes at least one of:
reporting, by a Redcap terminal, at least one of a first parameter, a second parameter, or a third parameter to a network device, where the first parameter, the second parameter, and the third parameter are used to calculate a downlink peak data rate of the Redcap terminal; or
reporting, by a Redcap terminal, at least one of a fourth parameter, a fifth parameter, or a sixth parameter to a network device, where the fourth parameter, the fifth parameter, and the sixth parameter are used to calculate an uplink peak data rate of the Redcap terminal.

According to a third aspect of embodiments of the present disclosure, a method for determination is provided. The method is performed by a communication system, the communication system includes a terminal and a network device, and the method includes at least one of:
reporting, by a Redcap terminal, at least one of a first parameter, a second parameter, or a third parameter to a network device, where the first parameter, the second parameter, and the third parameter are used to calculate a downlink peak data rate of the Redcap terminal;
reporting, by a Redcap terminal, at least one of a fourth parameter, a fifth parameter, or a sixth parameter to a network device, where the fourth parameter, the fifth parameter, and the sixth parameter are used to calculate an uplink peak data rate of the Redcap terminal;
determining, by a network device, at least one of a first parameter, a second parameter, or a third parameter, where the first parameter, the second parameter, and the third parameter are used to calculate a downlink peak data rate of a Redcap terminal;
determining, by a network device, at least one of a fourth parameter, a fifth parameter, or a sixth parameter, where the fourth parameter, the fifth parameter, and the sixth parameter are used to calculate an uplink peak data rate of a Redcap terminal;
calculating, by a network device, a downlink peak data rate of a Redcap terminal based on a first parameter, a second parameter, and a third parameter;
calculating, by a network device, an uplink peak data rate of a Redcap terminal based on a fourth parameter, a fifth parameter, and a sixth parameter; or
scheduling, by a network device, a resource for a Redcap terminal based on a calculated downlink peak data rate and/or uplink peak data rate.

According to a fourth aspect of embodiments of the present disclosure, a network device is provided. The network device includes at least one of:
a processing module, configured to determine at least one of a first parameter, a second parameter, or a third parameter, where the first parameter, the second parameter, and the third parameter are used to calculate a downlink peak data rate of a Redcap terminal; or
a processing module, configured to determine at least one of a fourth parameter, a fifth parameter, or a sixth parameter, where the fourth parameter, the fifth parameter, and the sixth parameter are used to calculate an uplink peak data rate of a Redcap terminal.

According to a fifth aspect of embodiments of the present disclosure, a Redcap terminal is provided. The Redcap terminal includes at least one of:
a sending module, configured to report at least one of a first parameter, a second parameter, or a third parameter to a network device, where the first parameter, the second parameter, and the third parameter are used to calculate a downlink peak data rate of the Redcap terminal; or
a sending module, configured to report at least one of a fourth parameter, a fifth parameter, or a sixth parameter to a network device, where the fourth parameter, the fifth parameter, and the sixth parameter are used to calculate an uplink peak data rate of the Redcap terminal.

According to a sixth aspect of embodiments of the present disclosure, a communication device is provided. The device includes:
one or more processors.

The one or more processors are configured to invoke instructions to cause the communication device to perform the method for determination described in the first or second aspect.

According to a seventh aspect of embodiments of the present disclosure, a communication system is provided. The system includes a terminal and a network device. The network device is configured to implement the method for determination described in the first aspect, and the terminal is configured to implement the method for determination described in the second aspect.

According to an eighth aspect of embodiments of the present disclosure, a storage medium storing instructions is provided. When the instructions are executed on a communication device, the communication device is caused to perform the method for determination as described in the first or second aspect.

### BRIEF DESCRIPTION OF THE DRAWINGS

The above and/or additional aspects and advantages of the present disclosure will become apparent and readily understood from the following description of the embodiments taken in conjunction with the accompanying drawings.
Fig. 1 is a schematic diagram of architectures of some communication systems provided in embodiments of the present disclosure.
Figs. 2A-2F are interactive schematic diagrams of methods for determination provided in embodiments of the present disclosure.
Figs. 3A-3G are schematic flowcharts of methods for determination provided in embodiments of the present disclosure.
Figs. 4A-4G are schematic flowcharts of methods for determination provided in embodiments of the present disclosure.
Fig. 5A is a flowchart illustrating a method for determination provided in another embodiment of the present disclosure.
Fig. 6A is a schematic diagram of a structure of a network device provided in an embodiment of the present disclosure.
Fig. 6B is a schematic diagram of a structure of a reduced capability (Redcap) terminal provided in an embodiment of the present disclosure.
Fig. 7A is a schematic diagram of a structure of a communication device provided in an embodiment of the present disclosure.
Fig. 7B is a schematic diagram of a structure of a chip provided in an embodiment of the present disclosure.

### DETAILED DESCRIPTION

Embodiments of the present disclosure provide a method and an apparatus for determination, a communication device, a communication system, and a storage medium.

In a first aspect, embodiments of the present disclosure provide a method for determination. The method is performed by a network device, and includes at least one of:
determining, by the network device, at least one of a first parameter, a second parameter, or a third parameter, where the first parameter, the second parameter, and the third parameter are used to calculate a downlink peak data rate of a reduced capability (Redcap) terminal; or
determining, by the network device, at least one of a fourth parameter, a fifth parameter, or a sixth parameter, where the fourth parameter, the fifth parameter, and the sixth parameter are used to calculate an uplink peak data rate of a Redcap terminal.

In the above embodiments, the network device may determine at least one of the first parameter, the second parameter, or the third parameter to calculate the downlink peak data rate of the Redcap terminal; and/or, the network device may determine at least one of the fourth parameter, the fifth parameter, or the sixth parameter to calculate the uplink peak data rate of the Redcap terminal. Therefore, the method for determination of the present disclosure may be used by the network device to determine the parameter used to calculate the uplink and downlink peak data rates of the Redcap terminal, so that the network device may successfully calculate the uplink and downlink peak data rates of the Redcap terminal, which facilitates the network device to perform uplink and downlink resource scheduling for the Redcap terminal in the future, thereby ensuring the accuracy and rationality of the resource scheduling.

In conjunction with some embodiments of the first aspect, in some embodiments, the first parameter and the fourth parameter are modulation orders, the second parameter is a maximum number of downlink multiple-input multiple-output (MIMO) layers supported by the Redcap terminal, the fifth parameter is a maximum number of uplink MIMO layers supported by the Redcap terminal, and the third parameter and the sixth parameter are scaling factors.

In the above embodiments, the first parameter, second parameter, third parameter, fourth parameter, fifth parameter, and sixth parameter are respectively defined as the specific parameters, so that the network device may determine the specific parameter values and successfully calculate the uplink and downlink peak data rates of the Redcap terminal.

In conjunction with some embodiments of the first aspect, in some embodiments, reporting types of the first parameter, the second parameter, and the third parameter are mandatory reporting or optional reporting; and reporting types of the fourth parameter, the fifth parameter, and the sixth parameter are mandatory reporting or optional reporting.

In response to the reporting types of the first parameter, the second parameter, and the third parameter being the mandatory reporting, the first parameter, the second parameter, and the third parameter are reported by the Redcap terminal to the network device.

In response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device.

In response to the reporting type of the fourth parameter, the fifth parameter, and the sixth parameter being the mandatory reporting, the fourth parameter, the fifth parameter, and the sixth parameter are reported by the Redcap terminal to the network device.

In response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In the above embodiments, the reporting types of the first parameter, second parameter, third parameter, fourth parameter, fifth parameter, and sixth parameter are respectively defined as mandatory reporting or optional reporting. When the reporting types of the first parameter, second parameter, third parameter, fourth parameter, fifth parameter, and sixth parameter are different, the methods for determining the first parameter, second parameter, third parameter, fourth parameter, fifth parameter, and sixth parameter will also be different. The network device may determine at least one of the first parameter, second parameter, third parameter, fourth parameter, fifth parameter, and sixth parameter based on the reporting types corresponding to the first parameter, second parameter, third parameter, fourth parameter, fifth parameter, and sixth parameter, so as to successfully determine at least one of the first parameter, second parameter, third parameter, fourth parameter, fifth parameter, and sixth parameter, thereby facilitating the network device to successfully calculate the uplink and downlink peak data rates of the Redcap terminal based on the determined parameter values.

In conjunction with some embodiments of the first aspect, in some embodiments, the Redcap terminal includes a first release terminal or a second release terminal, where a first release precedes a second release.

In the above embodiments, the Redcap terminal includes the first release terminal or the second release terminal. Therefore, the method of the present disclosure may be applied to both the first and second releases to determine at least one of the first parameter, second parameter, third parameter, fourth parameter, fifth parameter, or sixth parameter corresponding to the Redcap terminal in the first release, and to determine at least one of the first parameter, second parameter, third parameter, fourth parameter, fifth parameter, or sixth parameter corresponding to the Redcap terminal in the second release. This facilitates the subsequent successful calculation of the uplink and downlink peak data rates of the Redcap terminal in the first release and the uplink and downlink peak data rates of the Redcap terminal in the second release, and has a wide range of applications.

In conjunction with some embodiments of the first aspect, in some embodiments, determining at least one of the first parameter, the second parameter, or the third parameter includes:
receiving the first parameter, the second parameter, and the third parameter reported by the Redcap terminal, in response to the reporting types of the first parameter, the second parameter, and the third parameter being the mandatory reporting, and
determining at least one of the fourth parameter, the fifth parameter, or the sixth parameter includes:
   receiving the fourth parameter, the fifth parameter, and the sixth parameter reported by the Redcap terminal, in response to the reporting types of the fourth parameter, the fifth parameter, and the sixth parameter being the mandatory reporting.

In the above embodiments, the method is provided for the network device to determine the first, second, third, fourth, fifth, and sixth parameters when the reporting type of the first, second, third, fourth, fifth, and sixth parameters is mandatory reporting. The method is used to successfully determine the first, second, third, fourth, fifth, and sixth parameters, which facilitates the subsequent calculation of the uplink and downlink peak data rates of the Redcap terminal. This allows the network device to subsequently perform uplink and downlink resource scheduling for the Redcap terminal based on the uplink and downlink peak data rates of the Redcap terminal, thereby ensuring the accuracy and rationality of the resource scheduling.

In conjunction with some embodiments of the first aspect, in some embodiments, the Redcap terminal is the second release terminal, and determining at least one of the first parameter, the second parameter, or the third parameter includes:
in response to the second release terminal reporting any one or two of the first parameter, the second parameter, or the third parameter, determining a parameter not reported by the second release terminal among the first parameter, the second parameter, and the third parameter; or
in response to the second release terminal not reporting the first parameter, the second parameter, and the third parameter, determining the first parameter, the second parameter, and the third parameter.
where the first parameter, the second parameter, and the third parameter meet a first condition.

In conjunction with some embodiments of the first aspect, in some embodiments, the first condition includes at least one of:
the second release terminal supports a first feature group (FG), and a product of the first parameter, the second parameter, and the third parameter is equal to a first value; or
the second release terminal supports a second FG, and a product of the first parameter, the second parameter, and the third parameter is equal to a second value or a third value, where in response to the maximum number of downlink MIMO layers supported by the second release terminal being 1 layer, the product of the first parameter, the second parameter, and the third parameter is equal to the second value, and in response to the maximum number of downlink MIMO layers supported by the second release terminal being 2 layers, the product of the first parameter, the second parameter, and the third parameter is equal to the third value.

In conjunction with some embodiments of the first aspect, in some embodiments, the first FG is FG 48-1, the second FG is FG 48-2, the first value is 3.2, the second value is 0.75, and the third value is 0.8.

In conjunction with some embodiments of the first aspect, in some embodiments, the Redcap terminal is the second release terminal, the second release terminal supports the first FG, and determining at least one of the first parameter, the second parameter, or the third parameter includes at least one of:
in response to the second release terminal not reporting the second parameter, defaulting the second parameter to 1;
in response to the second release terminal not reporting the first parameter, and the second parameter indicating that the maximum number of downlink MIMO layers supported by the second release terminal is 1 layer, determining the first parameter as 4 or 8;
in response to the second release terminal not reporting the third parameter, and the second parameter indicating that the maximum number of downlink MIMO layers supported by the second release terminal is 1 layer, determining the third parameter as 0.8 or 0.4;
in response to the second release terminal not reporting the first parameter, the second parameter indicating that the maximum number of downlink MIMO layers supported by the second release terminal is 2 layers, and the third parameter reported by the second release terminal being 0.4, determining the first parameter as 4;
in response to the second release terminal not reporting the first parameter, the second parameter indicating that the maximum number of downlink MIMO layers supported by the second release terminal is 2 layers, and the third parameter reported by the second release terminal being 0.8, determining the first parameter as 2;
in response to the second release terminal not reporting the first parameter and the third parameter, and the second parameter indicating that the maximum number of downlink MIMO layers supported by the second release terminal is 2 layers, determining the first parameter as 4 and the third parameter as 0.4, or determining the first parameter as 2 and the third parameter as 0.8;
in response to the second release terminal not reporting the third parameter, the second parameter indicating that the maximum number of downlink MIMO layers supported by the second release terminal is 2 layers, and the first parameter reported by the second release terminal being 4, determining the third parameter as 0.4; or
in response to the second release terminal not reporting the third parameter, the second parameter indicating that the maximum number of downlink MIMO layers supported by the second release terminal is 2 layers, and the first parameter reported by the second release terminal being 2, determining the third parameter as 0.8.

In conjunction with some embodiments of the first aspect, in some embodiments, the Redcap terminal is the second release terminal, the second release terminal supports the second FG, and determining at least one of the first parameter, the second parameter, or the third parameter includes at least one of:
in response to the second release terminal not reporting the first parameter, determining the first parameter as 1;
in response to the second release terminal not reporting the second parameter, determining the second parameter as 1;
in response to the second release terminal not reporting the third parameter, and the second parameter indicating that the maximum number of downlink MIMO layers supported by the second release terminal is 1 layer, determining the third parameter as 0.75; or
in response to the second release terminal not reporting the third parameter, and the second parameter indicating that the maximum number of downlink MIMO layers supported by the second release terminal is 2 layers, determining the third parameter as 0.4.

In the above embodiments, the method is provided for the network device to determine the parameter that the second release terminal does not report. This method enables the network device to successfully determine the parameter that the second release terminal does not report among the first parameter, the second parameter, and the third parameter. Then the network device may calculate the downlink peak data rate of the second release terminal based on the determined parameter and the parameter reported by the second release terminal. This allows the network device to perform downlink resource scheduling for the second release terminal based on the downlink peak data rate of the Redcap terminal, thereby ensuring the accuracy and rationality of resource scheduling.

In conjunction with some embodiments of the first aspect, in some embodiments, the Redcap terminal is the first release terminal, the first release terminal is in an FR1 band, and determining at least one of the first parameter, the second parameter, or the third parameter includes:
in response to the first release terminal not reporting the first parameter, and the first release terminal reporting that 256 quadrature amplitude modulation (QAM) is supported, determining the first parameter as the 256QAM; otherwise, determining the first parameter as 64QAM; or
in response to the first release terminal not reporting the first parameter, determining the first parameter as 64QAM.

In the above embodiments, the method is provided for the network device to determine the first parameter when the first release terminal does not report the first parameter, so that the network device may successfully determine the first parameter. Then, the network device may calculate the downlink peak data rate of the second release terminal based on the determined first parameter, so that the network device may perform downlink resource scheduling for the first release terminal based on the downlink peak data rate of the Redcap terminal, thereby ensuring the accuracy and rationality of resource scheduling.

In conjunction with some embodiments of the first aspect, in some embodiments, the Redcap terminal is the second release terminal, and determining at least one of the fourth parameter, the fifth parameter, or the sixth parameter includes at least one of:
determining the fifth parameter; or
in response to the second release terminal not reporting the fourth parameter and/or the sixth parameter, determining the fourth parameter and/or the sixth parameter based on the second parameter, where the second parameter, the fourth parameter, and the sixth parameter meet a second condition, or determining the fourth parameter and/or the sixth parameter based on the fifth parameter, where the fourth parameter, the fifth parameter, and the sixth parameter meet a third condition.

In conjunction with some embodiments of the first aspect, in some embodiments, determining the fifth parameter includes at least one of:
in response to the second release terminal not reporting the fifth parameter, defaulting the fifth parameter to 1;
in response to the second release terminal reporting the fifth parameter indicating that the maximum number of uplink MIMO layers is 1 layer, determining the fifth parameter as 1; or
in response to the second release terminal reporting the second parameter indicating that the maximum number of downlink MIMO layers is 2 layers, determining the fifth parameter as 2.

In conjunction with some embodiments of the first aspect, in some embodiments, the second condition includes at least one of:
the second release terminal supports the first FG, and a product of the second parameter, the fourth parameter, and the sixth parameter is equal to the first value; or
the second release terminal supports the second FG, and a product of the second parameter, the fourth parameter, and the sixth parameter is equal to the second value or the third value, where in response to the second parameter indicating that the maximum number of downlink MIMO layers supported by the second release terminal is 1 layer, the product of the second parameter, the fourth parameter, and the sixth parameter is equal to the second value, and in response to the second parameter indicating that the maximum number of downlink MIMO layers supported by the second release terminal is 2 layers, the product of the second parameter, the fourth parameter, and the sixth parameter is equal to the third value.

In conjunction with some embodiments of the first aspect, in some embodiments, the third condition includes at least one of:
the second release terminal supports the first FG, and a product of the fourth parameter, the fifth parameter, and the sixth parameter is equal to the first value; or
the second release terminal supports the second FG, and a product of the fourth parameter, the fifth parameter, and the sixth parameter is equal to the second value, where in response to the fifth parameter indicating that the maximum number of uplink MIMO layers supported by the second release terminal is 1 layer, the product of the fourth parameter, the fifth parameter, and the sixth parameter is equal to the second value.

In the above embodiments, the method is provided for the network device to determine the parameter that the second release terminal does not report. The method enables the network device to successfully determine the parameter that the second release terminal does not report among the fourth parameter, the fifth parameter, and the sixth parameter. Then the network device may calculate the uplink peak data rate of the second release terminal based on the determined parameter and the parameter reported by the second release terminal. This allows the network device to perform uplink resource scheduling for the second release terminal based on the maximum uplink data of the Redcap terminal, thereby ensuring the accuracy and rationality of resource scheduling.

In conjunction with some embodiments of the first aspect, in some embodiments, the Redcap terminal is the first release terminal, the first release terminal is in an FR1 band, and determining at least one of the fourth parameter, the fifth parameter, or the sixth parameter includes:
in response to the first release terminal not reporting the fourth parameter, and the first release terminal supporting 256QAM, determining the fourth parameter as the 256QAM; otherwise, determining the fourth parameter as 64QAM; or
in response to the first release terminal not reporting the fourth parameter, determining the fourth parameter as 64QAM.

In the above embodiments, the method is provided for the network device to determine the fourth parameter when the first release terminal does not report the fourth parameter, so that the network device may successfully determine the fourth parameter. Then, the network device may calculate the uplink peak data rate of the second release terminal based on the determined fourth parameter, so that the network device may perform uplink resource scheduling for the first release terminal based on the maximum uplink data rate of the Redcap terminal, thereby ensuring the accuracy and rationality of resource scheduling.

In a second aspect, embodiments of the present disclosure provide a method for determination. The method is performed by a Redcap terminal, and the method includes at least one of:
reporting, by the Redcap terminal, at least one of a first parameter, a second parameter, or a third parameter to a network device, where the first parameter, the second parameter, and the third parameter are used to calculate a downlink peak data rate of the Redcap terminal; or
reporting, by the Redcap terminal, at least one of a fourth parameter, a fifth parameter, or a sixth parameter to a network device, where the fourth parameter, the fifth parameter, and the sixth parameter are used to calculate an uplink peak data rate of the Redcap terminal.

In the above embodiments, the Redcap terminal may report at least one of the first parameter, the second parameter, or the third parameter to the network device, and/or the Redcap terminal may report at least one of the fourth parameter, the fifth parameter, or the sixth parameter to the network device. This allows the network device to determine the first, second, and third parameters, and/or the fourth parameter, the fifth parameter, or the sixth parameter based on the report of the Redcap terminal. This facilitates the network device in calculating the downlink peak data rate of the Redcap terminal based on the first parameter, the second parameter, and the third parameter, and/or the uplink peak data rate of the Redcap terminal based on the fourth parameter, the fifth parameter, and the sixth parameter. Then the network device may perform uplink and downlink resource scheduling for the Redcap terminal based on the downlink and/or uplink peak data rate of the Redcap terminal, thereby ensuring the accuracy and rationality of resource scheduling.

In conjunction with some embodiments of the first aspect, in some embodiments, the first parameter and the fourth parameter are modulation orders, the second parameter is a maximum number of downlink MIMO layers supported by the Redcap terminal, the fifth parameter is a maximum number of uplink MIMO layers supported by the Redcap terminal, and the third parameter and the sixth parameter are scaling factors.

In conjunction with some embodiments of the first aspect, in some embodiments, reporting types of the first parameter, the second parameter, and the third parameter are mandatory reporting or optional reporting; and reporting types of the fourth parameter, the fifth parameter, and the sixth parameter are mandatory reporting or optional reporting;
in response to the reporting types of the first parameter, the second parameter, and the third parameter being the mandatory reporting, the first parameter, the second parameter, and the third parameter are reported by the Redcap terminal to the network device;
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In conjunction with some embodiments of the first aspect, in some embodiments, the Redcap terminal includes a first release terminal or a second release terminal, where a first release precedes a second release.

In a third aspect, embodiments of the present disclosure provide a method for determination. The method is performed by a communication system, the communication system includes a terminal and a network device, and the method includes at least one of:
reporting, by a Redcap terminal, at least one of a first parameter, a second parameter, or a third parameter to the network device, where the first parameter, the second parameter, and the third parameter are used to calculate a downlink peak data rate of the Redcap terminal;
reporting, by a Redcap terminal, at least one of a fourth parameter, a fifth parameter, or a sixth parameter to the network device, where the fourth parameter, the fifth parameter, and the sixth parameter are used to calculate an uplink peak data rate of the Redcap terminal;
determining, by the network device, at least one of a first parameter, a second parameter, or a third parameter, where the first parameter, the second parameter, and the third parameter are used to calculate a downlink peak data rate of a Redcap terminal;
determining, by the network device, at least one of a fourth parameter, a fifth parameter, or a sixth parameter, where the fourth parameter, the fifth parameter, and the sixth parameter are used to calculate an uplink peak data rate of a Redcap terminal;
calculating, by the network device, a downlink peak data rate of a Redcap terminal based on a first parameter, a second parameter, and a third parameter;
calculating, by the network device, an uplink peak data rate of a Redcap terminal based on a fourth parameter, a fifth parameter, and a sixth parameter; or
scheduling, by the network device, a resource for a Redcap terminal based on a calculated downlink peak data rate and/or uplink peak data rate.

In a fourth aspect, embodiments of the present disclosure provide a network device. The device includes at least one of:
a processing module, configured to determine at least one of a first parameter, a second parameter, or a third parameter, where the first parameter, the second parameter, and the third parameter are used to calculate a downlink peak data rate of a Redcap terminal; or
a processing module, configured to determine at least one of a fourth parameter, a fifth parameter, or a sixth parameter, where the fourth parameter, the fifth parameter, and the sixth parameter are used to calculate an uplink peak data rate of a Redcap terminal.

In conjunction with some embodiments of the fourth aspect, in some embodiments, the first parameter and the fourth parameter are modulation orders, the second parameter is a maximum number of downlink MIMO layers supported by the Redcap terminal, the fifth parameter is a maximum number of uplink MIMO layers supported by the Redcap terminal, and the third parameter and the sixth parameter are scaling factors.

In conjunction with some embodiments of the fourth aspect, in some embodiments, reporting types of the first parameter, the second parameter, and the third parameter are mandatory reporting or optional reporting; and reporting types of the fourth parameter, the fifth parameter, and the sixth parameter are mandatory reporting or optional reporting;
where in response to the reporting types of the first parameter, the second parameter, and the third parameter being the mandatory reporting, the first parameter, the second parameter, and the third parameter are reported by the Redcap terminal to the network device; or
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In conjunction with some embodiments of the fourth aspect, in some embodiments, the Redcap terminal includes a first release terminal or a second release terminal, where a first release precedes a second release.

In conjunction with some embodiments of the fourth aspect, in some embodiments, the processing module is further configured to:
receive the first parameter, the second parameter, and the third parameter reported by the Redcap terminal, in response to the reporting types of the first parameter, the second parameter, and the third parameter being the mandatory reporting;
determining at least one of the fourth parameter, the fifth parameter, or the sixth parameter includes:
   receiving the fourth parameter, the fifth parameter, and the sixth parameter reported by the Redcap terminal, in response to the reporting types of the fourth parameter, the fifth parameter, and the sixth parameter being the mandatory reporting.

In conjunction with some embodiments of the fourth aspect, in some embodiments, the processing module is further configured to:
in response to the second release terminal reporting any one or two of the first parameter, the second parameter, or the third parameter, determining a parameter not reported by the second release terminal among the first parameter, the second parameter, and the third parameter; or
in response to the second release terminal not reporting the first parameter, the second parameter, and the third parameter, determining the first parameter, the second parameter, and the third parameter.
where the first parameter, the second parameter, and the third parameter meet a first condition.

In conjunction with some embodiments of the fourth aspect, in some embodiments, the first condition includes at least one of:
the second release terminal supports a first FG, and a product of the first parameter, the second parameter, and the third parameter is equal to a first value;
the second release terminal supports a second FG, and a product of the first parameter, the second parameter, and the third parameter is equal to a second value or a third value, where in response to the maximum number of downlink MIMO layers supported by the second release terminal being 1 layer, the product of the first parameter, the second parameter, and the third parameter is equal to the second value, and in response to the maximum number of downlink MIMO layers supported by the second release terminal being 2 layers, the product of the first parameter, the second parameter, and the third parameter is equal to the third value.

In conjunction with some embodiments of the fourth aspect, in some embodiments, the first FG is FG 48-1, the second FG is FG 48-2, the first value is 3.2, the second value is 0.75, and the third value is 0.8.

In conjunction with some embodiments of the fourth aspect, in some embodiments, the processing module is further configured to perform at least one of:
in response to the second release terminal not reporting the second parameter, defaulting the second parameter to 1;
in response to the second release terminal not reporting the first parameter, and the second parameter indicating that the maximum number of downlink MIMO layers supported by the second release terminal is 1 layer, determining the first parameter as 4 or 8;
in response to the second release terminal not reporting the third parameter, and the second parameter indicating that the maximum number of downlink MIMO layers supported by the second release terminal is 1 layer, determining the third parameter as 0.8 or 0.4;
in response to the second release terminal not reporting the first parameter, the second parameter indicating that the maximum number of downlink MIMO layers supported by the second release terminal is 2 layers, and the third parameter reported by the second release terminal being 0.4, determining the first parameter as 4;
in response to the second release terminal not reporting the first parameter, the second parameter indicating that the maximum number of downlink MIMO layers supported by the second release terminal is 2 layers, and the third parameter reported by the second release terminal being 0.8, determining the first parameter as 2;
in response to the second release terminal not reporting the first parameter and the third parameter, and the second parameter indicating that the maximum number of downlink MIMO layers supported by the second release terminal is 2 layers, determining the first parameter as 4 and the third parameter as 0.4, or determining the first parameter as 2 and the third parameter as 0.8;
in response to the second release terminal not reporting the third parameter, the second parameter indicating that the maximum number of downlink MIMO layers supported by the second release terminal is 2 layers, and the first parameter reported by the second release terminal being 4, determining the third parameter as 0.4; or
in response to the second release terminal not reporting the third parameter, the second parameter indicating that the maximum number of downlink MIMO layers supported by the second release terminal is 2 layers, and the first parameter reported by the second release terminal being 2, determining the third parameter as 0.8.

In conjunction with some embodiments of the fourth aspect, in some embodiments, the processing module is further configured to perform at least one of:
in response to the second release terminal not reporting the first parameter, determining the first parameter as 1;
in response to the second release terminal not reporting the second parameter, determining the second parameter as 1;
in response to the second release terminal not reporting the third parameter, and the second parameter indicating that the maximum number of downlink MIMO layers supported by the second release terminal is 1 layer, determining the third parameter as 0.75; or
in response to the second release terminal not reporting the third parameter, and the second parameter indicating that the maximum number of downlink MIMO layers supported by the second release terminal is 2 layers, determining the third parameter as 0.4.

In conjunction with some embodiments of the fourth aspect, in some embodiments, the processing module is further configured to:
in response to the first release terminal not reporting the first parameter, and the first release terminal reporting that 256 quadrature amplitude modulation (QAM) is supported, determine the first parameter as the 256QAM; otherwise, determine the first parameter as 64QAM; or
in response to the first release terminal not reporting the first parameter, determine the first parameter as 64QAM.

In conjunction with some embodiments of the fourth aspect, in some embodiments, the processing module is further configured to perform at least one of:
determining the fifth parameter; or
in response to the second release terminal not reporting the fourth parameter and/or the sixth parameter, determining the fourth parameter and/or the sixth parameter based on the second parameter, where the second parameter, the fourth parameter, and the sixth parameter meet a second condition, or determining the fourth parameter and/or the sixth parameter based on the fifth parameter, where the fourth parameter, the fifth parameter, and the sixth parameter meet a third condition.

In conjunction with some embodiments of the fourth aspect, in some embodiments, the processing module is further configured to perform at least one of:
in response to the second release terminal not reporting the fifth parameter, defaulting the fifth parameter to 1;
in response to the second release terminal reporting the fifth parameter indicating that the maximum number of uplink MIMO layers is 1 layer, determining the fifth parameter as 1; or
in response to the second release terminal reporting the second parameter indicating that the maximum number of downlink MIMO layers is 2 layers, determining the fifth parameter as 2.

In conjunction with some embodiments of the fourth aspect, in some embodiments, the second condition includes at least one of:
the second release terminal supports the first FG, and a product of the second parameter, the fourth parameter, and the sixth parameter is equal to the first value; or
the second release terminal supports the second FG, and a product of the second parameter, the fourth parameter, and the sixth parameter is equal to the second value or the third value, where in response to the second parameter indicating that the maximum number of downlink MIMO layers supported by the second release terminal is 1 layer, the product of the second parameter, the fourth parameter, and the sixth parameter is equal to the second value, and in response to the second parameter indicating that the maximum number of downlink MIMO layers supported by the second release terminal is 2 layers, the product of the second parameter, the fourth parameter, and the sixth parameter is equal to the third value.

In conjunction with some embodiments of the fourth aspect, in some embodiments, the third condition includes at least one of:
the second release terminal supports the first FG, and a product of the fourth parameter, the fifth parameter, and the sixth parameter is equal to the first value; or
the second release terminal supports the second FG, and a product of the fourth parameter, the fifth parameter, and the sixth parameter is equal to the second value, where in response to the fifth parameter indicating that the maximum number of uplink MIMO layers supported by the second release terminal is 1 layer, the product of the fourth parameter, the fifth parameter, and the sixth parameter is equal to the second value.

In conjunction with some embodiments of the fourth aspect, in some embodiments, the processing module is further configured to:
in response to the first release terminal not reporting the fourth parameter, and the first release terminal supporting 256QAM, determining the fourth parameter as the 256QAM; otherwise, determining the fourth parameter as 64QAM; or
in response to the first release terminal not reporting the fourth parameter, determining the fourth parameter as 64QAM.

In a fifth aspect, embodiments of the present disclosure provide a Redcap terminal. The Redcap terminal includes at least one of:
a sending module, configured to report at least one of a first parameter, a second parameter, or a third parameter to a network device, where the first parameter, the second parameter, and the third parameter are used to calculate a downlink peak data rate of the Redcap terminal; or
a sending module, configured to report at least one of a fourth parameter, a fifth parameter, or a sixth parameter to a network device, where the fourth parameter, the fifth parameter, and the sixth parameter are used to calculate an uplink peak data rate of the Redcap terminal.

In conjunction with some embodiments of the fifth aspect, in some embodiments, the first parameter and the fourth parameter are modulation orders, the second parameter is a maximum number of downlink MIMO layers supported by the Redcap terminal, the fifth parameter is a maximum number of uplink MIMO layers supported by the Redcap terminal, and the third parameter and the sixth parameter are scaling factors.

In conjunction with some embodiments of the fifth aspect, in some embodiments, reporting types of the first parameter, the second parameter, and the third parameter are mandatory reporting or optional reporting; and reporting types of the fourth parameter, the fifth parameter, and the sixth parameter are mandatory reporting or optional reporting;
where in response to the reporting types of the first parameter, the second parameter, and the third parameter being the mandatory reporting, the first parameter, the second parameter, and the third parameter are reported by the Redcap terminal to the network device; or
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In conjunction with some embodiments of the fifth aspect, in some embodiments, the Redcap terminal includes a first release terminal or a second release terminal, where a first release precedes a second release.

In a sixth aspect, embodiments of the present disclosure provide a communication device. The communication device includes: one or more processors; one or more memories for storing instructions; where the one or more processors are configured to invoke the instructions to cause the communication device to perform the method for determination described in the first aspect, implementations of the first aspect, the second aspect, and implementations of the second aspect.

In a seventh aspect, embodiments of the present disclosure provide a communication system. The system includes a terminal and a network device. The network device is configured to perform the method described in the first aspect and implementations of the first aspect, and the terminal is configured to perform the method described in the second aspect and implementations of the second aspect.

In an eighth aspect, embodiments of the present disclosure provide a storage medium storing instructions. When the instructions are executed on a communication device, the communication device is caused to perform the method for determination described in the first aspect, implementations of the first aspect, the second aspect, and implementations of the second aspect.

In a ninth aspect, embodiments of the present disclosure provide a program product. When the program product is executed by a communication device, the communication device is caused to perform the method for determination as described in the first aspect, implementations of the first aspect, the second aspect, and implementations of the second aspect.

In a tenth aspect, embodiments of the present disclosure provide a computer program. When the computer program is run on a computer, the computer is caused to perform the method for determination as described in the first aspect, implementations of the first aspect, the second aspect, and implementations of the second aspect.

It is understood that the aforementioned terminal, network device, communication device, communication system, storage medium, program product, and computer program are all used to execute the method proposed in embodiments of the present disclosure. Therefore, the beneficial effects that may be achieved by the terminal, network device, communication device, communication system, storage medium, program product, and computer program, may be referred to the beneficial effects of the corresponding method, and will not be repeated here.

An invention title is proposed by embodiments of the present disclosure. In some embodiments, terms "determining method", "information processing method", "information sending method", and "information receiving method" may be replaced with each other. Terms "communication device", "information processing device", "information sending device", and "information receiving device" may be replaced with each other. Terms "information processing system", "communication system", "information sending system", and "information receiving system" may be replaced with each other.

The embodiments of the present disclosure are not exhaustive, but merely illustrative of some embodiments, and are not intended to limit the scope of protection of the present disclosure. Without contradiction, each step in a particular embodiment may be implemented as an independent embodiment, and the steps may be arbitrarily combined. For example, a solution after removing some steps in a particular embodiment may also be implemented as an independent embodiment, and an order of steps in a particular embodiment may be arbitrarily interchanged. In addition, implementations in a particular embodiment may be arbitrarily combined. Furthermore, the embodiments may be arbitrarily combined. For example, some or all steps of different embodiments may be arbitrarily combined, and a particular embodiment may be arbitrarily combined with implementations of other embodiments.

In each of the embodiments of the present disclosure, unless otherwise specified or in case of logical conflict, the terms and/or descriptions of the embodiments are consistent and may be referenced by each other. Technical features in different embodiments may be combined to form new embodiments based on their inherent logical relationships.

The terms used in the embodiments of the present disclosure are for the purpose of describing particular embodiments only and are not intended to limit the scope of the present disclosure.

In the embodiments of the present disclosure, unless otherwise stated, elements expressed in the singular, such as "a", "an", "the", "this", "said", "above mentioned", "aforementioned", etc., may mean "one and only one", "one or more", "at least one", etc. For example, when using articles such as "a", "an", and "the" in translation, the noun following the article may be understood as either a singular or a plural form.

In the embodiments of the present disclosure, "multiple" refers to two or more.

In some embodiments, terms "at least one of", "one or more", "a plurality of", "multiple", etc., may be replaced with each other.

In some embodiments of the present disclosure, descriptions such as "at least one of A, B or C", "A and/or B and/or C" include a case where any one of A, B or C exists alone, and any combination of any plurality of A, B, C..., and each case may exist alone. For example, "at least one of A, B or C" includes situations where A exists alone, B exists alone, C exists alone, a combination of A and B, a combination of A and C, a combination of B and C and a combination of A and B and C. For example, "A and/or B" includes situations where A exists alone, B exists alone and a combination of A and B.

In some embodiments, "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

Prefix words such as "first" and "second" in embodiments of the present disclosure are only for distinguishing different description objects, and do not constitute restrictions on the position, order, priority, quantity, content, etc. of the description objects. For statements of the description objects, reference may be made to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining that", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments. Terms such as "apparatus", "equipment", "device", "circuit", "network element", "node", "function", "unit", "section", "system", "network", "chip", "chip system", "entity", "body" and the like may be replaced with each other.

In some embodiments, the "network" may be interpreted as an apparatus included in the network, for example, an access network device, a core network device, or the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, the access network device, the core network device, or the network device may be replaced with the terminal. For example, each embodiment of the present disclosure may be applied to a configuration in which communication between the access network device, the core network device, or the network device and the terminal is replaced with communication between a plurality of terminals (for example, it may also be referred to as a device-to-device (D2D), a vehicle-to-everything (V2X), or the like). In this case, the terminal may have all or a part of the functions of the access network device. Further, terms such as "uplink" and "downlink" may be replaced with terms corresponding to communication between terminals (for example, "side"). For example, an uplink channel, a downlink channel and the like may be replaced with a side channel, and an uplink, a downlink and the like may be replaced with a side link.

In some embodiments, the terminal may be replaced with the access network device, the core network device, or the network device. In this case, the access network device, the core network device, or the network device may have all or a part of the functions of the terminal.

In some embodiments, the acquisition of data, information, etc., may comply with laws and regulations of the country where it is located.

In some embodiments, data, information and the like may be acquired after obtaining the user's consent.

Further, each element, each row, or each column in the table of embodiments of the present disclosure may be implemented as an independent embodiment, and any combination of any element, any row, or any column may also be implemented as an independent embodiment.

The correspondences shown in the tables in the present disclosure may be configured or may be predefined. The values of information in the tables are merely examples and may be configured with other values, which are not limited by the present disclosure. In configuring the correspondence between the information and the parameter, it is not necessarily required that all the correspondences illustrated in the tables must be configured. For example, the correspondences illustrated in certain rows in the tables in the present disclosure may not be configured. For another example, the above tables may be adjusted appropriately, such as splitting, combining, and the like. The names of the parameters shown in the titles of the above tables may be other names that may be understood by the indicating apparatus, and the values or representations of the parameters may be other values or representations that may be understood by the indicating apparatus. Each of the above tables may also be implemented with other data structures, such as, arrays, queues, containers, stacks, linear tables, pointers, chained lists, trees, graphs, structures, classes, heaps, and Hash tables.

The term "predefine" in the present disclosure may be understood as define, predefine, store, pre-store, pre-negotiate, pre-configure, solidify, or pre-fire.

The following is a description of terms used in the present disclosure:

### 1. Reduced Capability (Redcap) Terminal

The Redcap UE is a new technology standard that 3GPP specifically initiated and researched during the 5G Release-17, and is a lightweight 5G.

### 2. eRedcap terminal

The eRedCap UE is a further evolution of the RedCap UE by 3GPP in the 5G Release-18. Compared with the RedCap UE, the eRedCap UE has lower terminal implementation complexity.

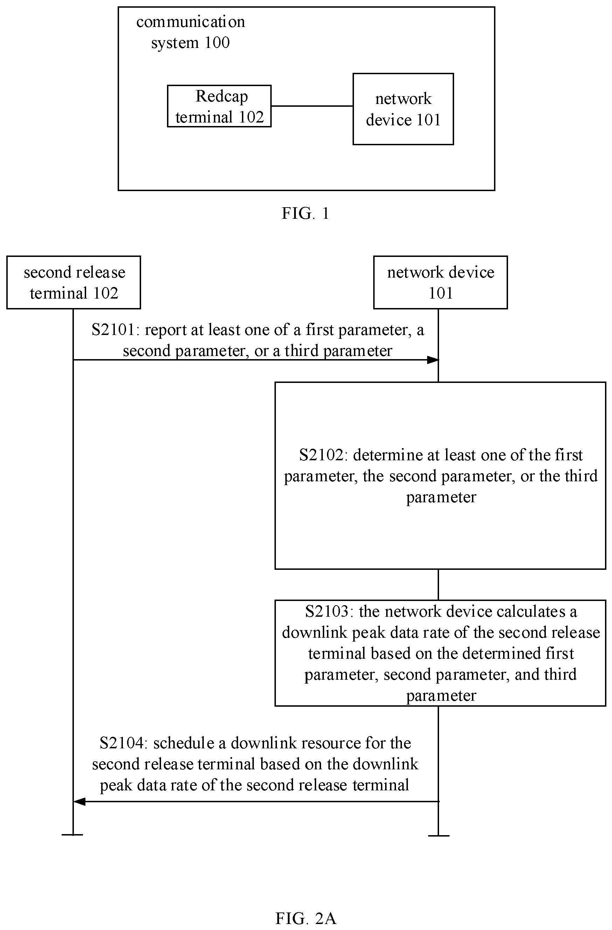

Fig. 1 is a schematic diagram of an architecture of a communication system according to an embodiment of the present disclosure. As shown in Fig. 1, the communication system 100 may include at least one of a network device 101 and a Redcap terminal 102. The network device 101 may include at least one of an access network device and a core network device. The Redcap terminal 102 may include a first release terminal or a second release terminal, where a first release precedes a second release. The first release terminal may be, for example, a Rel-17 Redcap terminal, and the second release may be, for example, a Rel-18 Redcap terminal (or eRedcap terminal).

In some embodiments, the terminal includes, but is not limited to, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the access network device is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited thereto.

In some embodiments, the core network device may be one device including one or more network elements, or may be multiple devices or groups of devices including all or part of the above one or more network elements, respectively. The network element may be virtual or physical. The core network includes, for example, at least one of an evolved packet core (EPC), a 5G core network (5GCN), and a next generation core (NGC). Alternatively, the core network device may also be a location management function network element. For example, the location management function network element includes a location server, which may be implemented as any one of: a Location Management Function (LMF), an Enhanced Serving Mobile Location Centre (E-SMLC), a Secure User Plane Location (SUPL), or a Secure User Plane Location Platform (SUPLLP).

It is understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new service scenarios, the technical solution provided by embodiments of the present disclosure is applicable to similar technical problems.

The following embodiments of the present disclosure may be applied to the communication system 100 illustrated in Fig. 1 or a part of the body, which is not limited in embodiments of the present disclosure. Each entity shown in Fig. 1 is an example, and the communication system may include all or some of the bodies shown in Fig. 1, or other entities other than those shown in Fig. 1, the number and form of the entities are arbitrary, the connection relationship between the entities is an example, and the entities may not be connected or not connected, and the connection may be any form, such as direct connection or indirect connection, or wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In an implementation, the aforementioned capability parameters for calculating the peak data rate of the terminal include: the modulation order, the maximum number of MIMO layers supported by the terminal, and the scaling factor. The terminal may not report all of the above capability parameters to the network device, but may report one or more of the above capability parameters, or the terminal may not report any capability parameter to the network device. For example, the terminal may report the modulation order and the supported maximum number of MIMO layers to the network device without reporting the scaling factor, or the terminal may report the supported maximum number of MIMO layers to the network device without reporting the scaling factor and modulation order, or the terminal may not report the modulation order, the maximum number of MIMO layers and the scaling factor to the network device. For a capability parameter not reported by the terminal, the network device may determine based on a predefined condition. The predefined condition may include, for example, ensuring that a product of the modulation order, the maximum number of MIMO layers supported by the terminal, and the scaling factor meets a predefined value. In an implementation, when the terminal reports the modulation order and the supported maximum number of MIMO layers but not the scaling factor, the network device may determine that the scaling factor = predefined value ÷ (modulation order × maximum number of MIMO layers); or when the terminal reports the maximum number of MIMO layers but not the scaling factor and modulation order, the network device should ensure that a product of the scaling factor and the modulation order is equal to a value obtained by dividing the predefined value by the maximum number of MIMO layers, when determining the values of the scaling factor and the modulation order; or when the terminal does not report any of the above capability parameters, the network device may set the scaling factor to 1 by default, and then determine the values of the modulation order and the maximum number of MIMO layers based on the predefined condition, to ensure that the product of the modulation order, the maximum number of MIMO layers, and the scaling factor is the predefined value; or when the terminal does not report any of the above capability parameters, if the terminal is in the FR1 band and the downlink supports 1024 quadrature amplitude modulation (QAM), the modulation order is set to 1024QAM by default; otherwise, the modulation order is 256QAM by default. Then, the values of the scaling factor and the maximum number of MIMO layers are determined based on the predefined condition, to ensure that the product of the modulation order, the maximum number of MIMO layers, and the scaling factor is the predefined value.

In an implementation, in newer releases (such as Rel-17 and Rel-18), the Redcap terminal and eRedcap terminal are introduced. Since the Redcap terminal and eRedcap terminal have different capabilities than a normal terminal, the capability parameters supported by the Redcap terminal and eRedcap terminals are also different from those supported by the normal terminal. Therefore, a predefined condition for determining an unreported capability parameter of the normal terminal is not applicable to determining an unreported capability parameter of the Redcap terminal and eRedcap terminal. Therefore, a method for determining the unreported capability parameter of the Redcap terminal and eRedcap terminal is urgently needed.

Fig. 2A is an interactive schematic diagram illustrating a method for determination according to an embodiment of the present disclosure. As shown in Fig. 2A, embodiments of the present disclosure are related to a method for determination applicable to a communication system 100. The method includes the following steps.

Step 2101, a second release terminal reports at least one of a first parameter, a second parameter, or a third parameter.

In some embodiments, a second release may be, for example, Rel-18. In this case, the second release terminal may be a RedCap terminal in the second release. For example, the second release terminal may be called "Rel-18 RedCap terminal", "eRedCap terminal", etc., which is not limited in the present disclosure.

In an implementation, the second release terminal may report at least one of the first parameter, the second parameter, or the third parameter to a network device. The network device may receive at least one of the first parameter, the second parameter, or the third parameter reported by the second release terminal.

In an implementation, the first, second, and third parameters may be used to calculate a downlink peak data rate of the second release terminal.

In some embodiments, the second release terminal may be configured to report the first parameter, the second parameter, and the third parameter. For example, the second release may be configured by the network device to report the first parameter, the second parameter, and the third parameter. Each of the first parameter, the second parameter, and the third parameter has a corresponding reporting type. The reporting type may include mandatory reporting or optional reporting. When the reporting type of a parameter is the mandatory reporting, it means that the parameter must be reported to the network device. When the reporting type of a parameter is the optional reporting, it means that the parameter may be reported to the network device optionally. For example, the parameter may be reported to the network device, or it may be not reported to the network device.

In some embodiments, when the reporting types of the first parameter, the second parameter, and the third parameter are the mandatory reporting, these three parameters are required to be reported to the network device by the second release terminal; or
when the reporting type of at least one of the first parameter, the second parameter, or the third parameter is the optional reporting, at least one of the first parameter, the second parameter, or the third parameter will be reported by the second release terminal to the network device, or at least one of the first parameter, the second parameter, or the third parameter will not be reported by the second release terminal to the network device.

In the embodiment of Fig. 2A, the premise is that the reporting type of at least one of the first parameter, the second parameter, or the third parameter is the optional reporting. In an implementation, when the reporting type of at least one of the first parameter, the second parameter, or the third parameter is the optional reporting, the second release terminal may report the first parameter, the second parameter, and the third parameter; or the second release terminal may report any one or any two of the first parameter, the second parameter, or the third parameter; or the second release terminal may not report the first parameter, the second parameter, and the third parameter.

In an implementation, the first parameter may be, for example, a modulation order; the second parameter may be, for example, a maximum number of downlink MIMO layers supported by the second release terminal; and the third parameter may be, for example, a scaling factor.

In an implementation, for the second release terminal, a value of the first parameter may be 1, 2, 4, 6 or 8. When the value of the first parameter is 8, it means that the modulation order used in the calculation of the peak data rate is 2⁸ = 256QAM. When the value of the first parameter is 6, it means that the modulation order used in the calculation of the peak data rate is 2⁶ = 64QAM.

In an implementation, for the second release terminal, a value of the second parameter may be 1 or 2. That is, the maximum number of downlink MIMO layers supported by the second release terminal may be 1 or 2 layers.

In an implementation, for the second release terminal, a value of the third parameter may be 1, 0.8, 0.75 or 0.4. That is, the scaling factor of the second release terminal may be 1, 0.8, 0.75 or 0.4.

In an implementation, in the embodiment of Fig. 2A, step 2101 described above may be performed or not, i.e., step 2101 may be performed or may not be performed.

Step 2102, the network device determines at least one of the first parameter, the second parameter, or the third parameter.

When the second release terminal reports the first parameter, the second parameter, and the third parameter, the network device may directly determine the first parameter, the second parameter, and the third parameter based on the report from the second release terminal.

When the second release terminal reports any one or any two of the first parameter, the second parameter, or the third parameter, the network device needs to determine the parameter(s) that the second release terminal does not report among the first parameter, the second parameter, and the third parameter; when the second release terminal does not report the first, second, and third parameters, the network device needs to determine the first, second, and third parameters.

In some embodiments, when the network device determines at least one of the first parameter, the second parameter, or the third parameter (e.g., when the network device determines a parameter that the second release terminal does not report among the first parameter, the second parameter, and the third parameter; or when the second release terminal does not report the first parameter, the second parameter, and the third parameter, and the network device determines the first parameter, the second parameter, and the third parameter), the determination should be based on a first condition. In an implementation, the first condition may be a condition that at least one of the first parameter, the second parameter, or the third parameter of the second release terminal needs to meet. In an implementation, the first condition may include at least one of:
the second release terminal supports a first feature group (FG, or feature combination), and a product of the first parameter, the second parameter, and the third parameter is equal to a first value; or
the second release terminal supports a second FG, and a product of the first parameter, the second parameter, and the third parameter is equal to a second value or a third value, where in response to the maximum number of downlink MIMO layers supported by the second release terminal being 1 layer, the product of the first parameter, the second parameter, and the third parameter is equal to the second value, and in response to the maximum number of downlink MIMO layers supported by the second release terminal being 2 layers, the product of the first parameter, the second parameter, and the third parameter is equal to the third value.

In an implementation, the first FG may be FG 48-1, the second FG may be FG 48-2, the first value may be 3.2, the second value may be 0.75, and the third value may be 0.8.

In some embodiments, when the second release terminal supports the first FG, the network device is required to ensure that the product of the first parameter, the second parameter and the third parameter is equal to the first value when determining at least one of the first parameter, the second parameter or the third parameter.

For example, when the second release terminal supports the first FG, the method that the network device determines at least one of the first parameter, the second parameter, or the third parameter may include at least one of:
in response to the second release terminal not reporting the second parameter, defaulting the second parameter to 1;
in response to the second release terminal not reporting the first parameter, and the second parameter indicating that the maximum number of downlink MIMO layers supported by the second release terminal is 1 layer, determining the first parameter as 4 or 8;
in response to the second release terminal not reporting the third parameter, and the second parameter indicating that the maximum number of downlink MIMO layers supported by the second release terminal is 1 layer, determining the third parameter as 0.8 or 0.4;
in response to the second release terminal not reporting the first parameter, the second parameter indicating that the maximum number of downlink MIMO layers supported by the second release terminal is 2 layers, and the third parameter reported by the second release terminal being 0.4, determining the first parameter as 4;
in response to the second release terminal not reporting the first parameter, the second parameter indicating that the maximum number of downlink MIMO layers supported by the second release terminal is 2 layers, and the third parameter reported by the second release terminal being 0.8, determining the first parameter as 2;
in response to the second release terminal not reporting the first parameter and the third parameter, and the second parameter indicating that the maximum number of downlink MIMO layers supported by the second release terminal is 2 layers, determining the first parameter as 4 and the third parameter as 0.4, or determining the first parameter as 2 and the third parameter as 0.8;
in response to the second release terminal not reporting the third parameter, the second parameter indicating that the maximum number of downlink MIMO layers supported by the second release terminal is 2 layers, and the first parameter reported by the second release terminal being 4, determining the third parameter as 0.4; or
in response to the second release terminal not reporting the third parameter, the second parameter indicating that the maximum number of downlink MIMO layers supported by the second release terminal is 2 layers, and the first parameter reported by the second release terminal being 2, determining the third parameter as 0.8.

For example, in an embodiment, when the second release terminal supports the first FG, assuming the second release terminal reports the second parameter as 1 layer, but does not report the first parameter and the third parameter, the network device may determine based on the first condition that the first parameter is 4 and the third parameter is 0.8. In another embodiment, assuming that the second release terminal does not report the first parameter, the second parameter and the third parameter, the network device may determine the second parameter as 1 by default based on the first condition, and then determine the first parameter as 4 and the third parameter as 0.8 based on the first condition. In another embodiment, assuming that the second release terminal reports the second parameter as 2 and the third parameter as 0.4, but does not report the first parameter, the network device may determine the first parameter as 4 based on the first condition.

In some embodiments, when the second release terminal supports the second FG, the network device is required to ensure that the product of the finally determined first parameter, the second parameter, and the third parameter is equal to the second value or the third value when determining at least one of the first parameter, the second parameter, or the third parameter. When the maximum number of MIMO layers supported by the second release terminal is 1 layer, the product of the determined first parameter, the second parameter, and the third parameter is equal to the second value; and when the maximum number of MIMO layers supported by the second release terminal is 2 layers, the product of the determined first parameter, the second parameter, and the third parameter is equal to the third value.

For example, when the second release terminal supports the second FG, the method that the network device determines at least one of the first parameter, the second parameter, or the third parameter may include at least one of:
in response to the second release terminal not reporting the first parameter, determining the first parameter as 1;
in response to the second release terminal not reporting the second parameter, determining the second parameter as 1;
in response to the second release terminal not reporting the third parameter, and the second parameter indicating that the maximum number of downlink MIMO layers supported by the second release terminal is 1 layer, determining the third parameter as 0.75; or
in response to the second release terminal not reporting the third parameter, and the second parameter indicating that the maximum number of downlink MIMO layers supported by the second release terminal is 2 layers, determining the third parameter as 0.4.

For example, in an embodiment, when the second release terminal supports the second FG, assuming the second release terminal reports the second parameter as 1 layer, but does not report the first parameter and the third parameter, the network device may determine based on the first condition that the first parameter is 1 and the third parameter is 0.75. In another embodiment, assuming that the second release terminal reports the second parameter as layer 2, but does not report the first parameter and the third parameter, the network device may determine based on the first condition that the first parameter is 1 and the third parameter is 0.4. In another embodiment, assuming that the second release terminal does not report the first parameter, the second parameter, and the third parameter, the network device may determine based on the first condition that the first parameter is 1, the second parameter is 1 layer, and the third parameter is 0.75.

Step 2103, the network device calculates a downlink peak data rate of the second release terminal based on the determined first parameter, second parameter, and third parameter.

In an implementation, the network device may calculate the downlink peak data rate of the second release terminal based on the parameter(s) reported by the second release terminal in step 2101 and/or the parameter(s) determined in step 2102. For example, assuming that in step 2101 above, the second release terminal reports the second parameter as 1 layer, but does not report the first parameter and the third parameter; meanwhile, in step 2102 above, the network device determines based on the first condition that the first parameter is 4 and the third parameter is 0.8. The network device may then calculate the downlink peak data rate of the second release terminal based on the first parameter being 4, the second parameter being 1 layer, and the third parameter being 0.8.

Step 2104, the network device schedules a downlink resource for the second release terminal based on the downlink peak data rate of the second release terminal.

The method for determination involved in embodiments of the present disclosure may include at least one of steps S2101 to S2104. For example, step S2101 may be implemented as an independent embodiment, step S2102 may be implemented as an independent embodiment, step S2103 may be implemented as an independent embodiment, and steps S2101+S2102 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

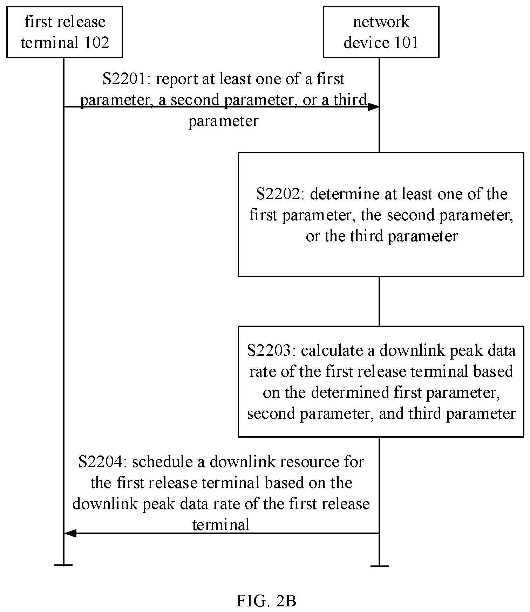

Fig. 2B is an interactive schematic diagram illustrating a method for determination according to an embodiment of the present disclosure. As shown in Fig. 2B, embodiments of the present disclosure are related to a method for determination applicable to a communication system 100. The method includes the following steps.

Step 2201, a first release terminal reports at least one of a first parameter, a second parameter, or a third parameter.

In some embodiments, the first release may be, for example, Rel-17. In this case, the first release terminal may be a RedCap terminal in the first release, such as "Rel-17 RedCap terminal", etc., which is not specifically limited in the present disclosure.

In an implementation, the first release terminal may report at least one of the first parameter, the second parameter, or the third parameter to the network device. The network device may receive at least one of the first parameter, the second parameter, or the third parameter reported by the first release terminal. In an implementation, both the first release terminal and the aforementioned second release terminal may be referred to as RedCap terminals. That is, in some embodiments, the RedCap terminal may include a first release terminal and a second release terminal.

In an implementation, the first, second, and third parameters may be used to calculate a downlink peak data rate of the first release terminal.

In some embodiments, the first release terminal may be configured to report the first parameter, the second parameter, and the third parameter. For example, the first release terminal may be configured by the network device to report the first parameter, the second parameter, and the third parameter. Each of the first parameter, the second parameter, and the third parameter corresponds to a reporting type, which may include mandatory reporting or optional reporting. For detailed description of the mandatory reporting, the optional reporting, the first parameter, the second parameter, and the third parameter, reference may be made to the descriptions in the above embodiments.

In an implementation, in the embodiment of Fig. 2B, the premise is that the reporting type of at least one of the first parameter, the second parameter, or the third parameter is optional reporting. In an implementation, when the reporting type of at least one of the first parameter, the second parameter, or the third parameter is the optional reporting, the first release terminal may report the first parameter, the second parameter, and the third parameter; or the first release terminal may report any one or any two of the first parameter, the second parameter, or the third parameter; or the first release terminal may not report the first parameter, the second parameter, and the third parameter.

In an implementation, in the embodiment of Fig. 2B, step 2201 described above may be performed or not, i.e., step 2201 may be performed or may not be performed.

Step 2202, a network device determines at least one of the first parameter, the second parameter, or the third parameter.

When the first release terminal reports the first parameter, the second parameter, and the third parameter, the network device may directly determine the first parameter, the second parameter, and the third parameter based on the report from the first release terminal. When the first release terminal reports any one or any two of the first parameter, the second parameter, or the third parameter, the network device needs to determine a parameter that the first release terminal does not report; when the first release terminal does not report the first, second, and third parameters, the network device needs to determine the first, second, and third parameters.

In some embodiments, when the first release terminal is in the FR1 band, the method that the network device determines at least one of the first parameter, the second parameter, or the third parameter may include:
in response to the first release terminal not reporting the first parameter, and if the first release terminal supports 256QAM (for example, the first release terminal may report its support of 256QAM to the network device), then the network device determines the first parameter as 256QAM; otherwise (for example, if the first release terminal supports a QAM other than 256), the first parameter is determined as 64QAM; or
in response to the first release terminal not reporting the first parameter, directly determining the first parameter as 64QAM.

Step 2203, the network device calculates a downlink peak data rate of the first release terminal based on the determined first parameter, second parameter, and third parameter.

In an implementation, the network device may calculate the downlink peak data rate of the first release terminal based on the parameter(s) reported by the first release terminal in step 2201 and/or the parameter(s) determined in step 2202. For a detailed description to this part, reference may be made to step 2103 above.

Step 2204, the network device schedules a downlink resource for the first release terminal based on the downlink peak data rate of the first release terminal.

The method for determination involved in embodiments of the present disclosure may include at least one of steps S2201 to S2204. For example, step S2201 may be implemented as an independent embodiment, step S2202 may be implemented as an independent embodiment, step S2203 may be implemented as an independent embodiment, and steps S2201+S2202 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

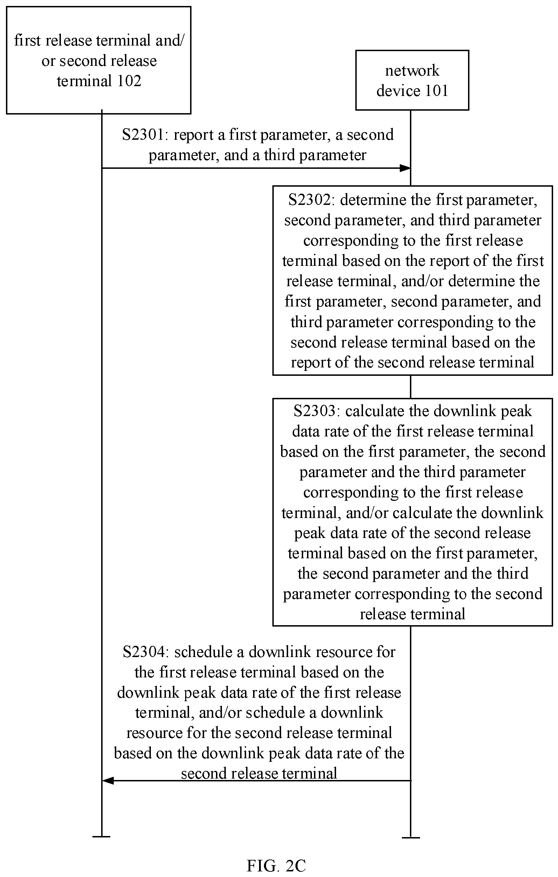

Fig. 2C is an interactive schematic diagram illustrating a method for determination according to an embodiment of the present disclosure. As shown in Fig. 2C, embodiments of the present disclosure are related to a method for determination applicable to a communication system 100. The method includes the following steps.

Step 2301, a first release terminal and/or a second release terminal reports a first parameter, a second parameter, and a third parameter.

In an implementation, in the embodiment of Fig. 2C, the premise is that the reporting types of the first parameter, the second parameter, and the third parameter are mandatory reporting.

In some embodiments, the first release terminal and/or the second release terminal may support the first FG and/or the second FG.

Step 2302, a network device determines the first parameter, second parameter, and third parameter corresponding to the first release terminal based on the report of the first release terminal, and/or determines the first parameter, second parameter, and third parameter corresponding to the second release terminal based on the report of the second release terminal.

In an implementation, the first parameter, second parameter, and third parameter corresponding to the first release terminal are used to calculate the downlink peak data rate of the first release terminal, and the first parameter, second parameter, and third parameter corresponding to the second release terminal are used to calculate the downlink peak data rate of the second release terminal.

Step 2303, the network device calculates the downlink peak data rate of the first release terminal based on the first parameter, the second parameter and the third parameter corresponding to the first release terminal, and/or calculates the downlink peak data rate of the second release terminal based on the first parameter, the second parameter and the third parameter corresponding to the second release terminal.

Step 2304, the network device schedules a downlink resource for the first release terminal based on the downlink peak data rate of the first release terminal, and/or schedules a downlink resource for the second release terminal based on the downlink peak data rate of the second release terminal.

The method for determination involved in embodiments of the present disclosure may include at least one of steps S2301 to S2304. For example, step S2301 may be implemented as an independent embodiment, step S2302 may be implemented as an independent embodiment, step S2303 may be implemented as an independent embodiment, and steps S2301+S2302 may be implemented as independent embodiments, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

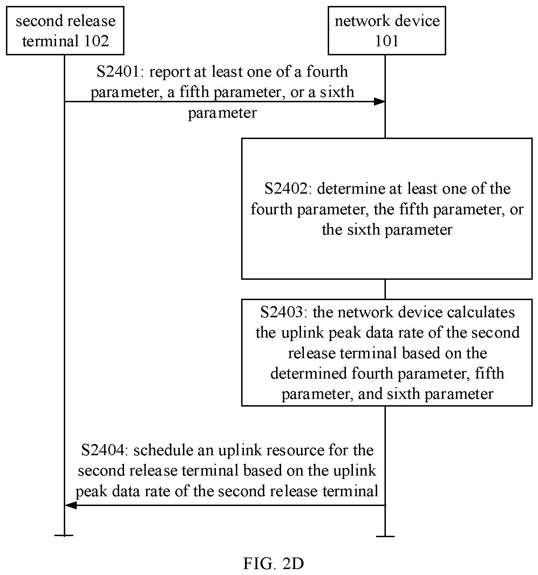

Fig. 2D is an interactive schematic diagram of a method for determination according to an embodiment of the present disclosure. As shown in Fig. 2D, embodiments of the present disclosure are related to a method for determination applicable to a communication system 100. The method includes the following steps.

Step 2401, a second release terminal reports at least one of a fourth parameter, a fifth parameter, or a sixth parameter.

In an implementation, for detailed descriptions of the second release, reference may be made to the above-described embodiments.

In an implementation, the second release terminal may report at least one of the fourth parameter, the fifth parameter, or the sixth parameter to the network device. The network device may receive at least one of the fourth parameter, the fifth parameter, or the sixth parameter reported by the second release terminal.

In an implementation, the fourth parameter, the fifth parameter, or the sixth parameter may be used to calculate an uplink peak data rate of the second release terminal.

In some embodiments, the second release terminal may be configured to report the fourth parameter, the fifth parameter, and the sixth parameter. For example, it may be configured by a network device to report the fourth parameter, the fifth parameter, and the sixth parameter. Each of the fourth parameter, the fifth parameter, or the sixth parameter has a corresponding reporting type, which may include mandatory reporting or optional reporting. When the reporting type of a parameter is mandatory reporting, it means that the parameter must be reported to the network device. When the reporting type of a parameter is optional reporting, it means that the parameter may be reported to the network device optionally. For example, the parameter may be reported to the network device, or it may be not reported to the network device.

In some embodiments, when the reporting types of the fourth parameter, the fifth parameter, and the sixth parameter are the mandatory reporting, these parameters must be reported by the second release terminal to the network device; or

when the reporting type of at least one of the fourth parameter, the fifth parameter, or the sixth parameter is the optional reporting, at least one of the fourth parameter, the fifth parameter, or the sixth parameter will be reported by the second release terminal to the network device; or at least one of the fourth parameter, the fifth parameter, or the sixth parameter will not be reported by the second release terminal to the network device.

In an implementation, in the embodiment of Fig. 2D, the premise is that the reporting type of at least one of the fourth parameter, the fifth parameter, or the sixth parameter is the optional reporting. In an implementation, when the reporting type of at least one of the fourth parameter, the fifth parameter, or the sixth parameter is the optional reporting, the second release terminal may report the fourth parameter, the fifth parameter, and the sixth parameter; or the second release terminal may report any one or any two of the fourth parameter, the fifth parameter, or the sixth parameter; or the second release terminal may not report the fourth parameter, the fifth parameter, and the sixth parameter.

In an implementation, the fourth parameter may be, for example, a modulation order; the fifth parameter may be, for example, a maximum number of uplink MIMO layers supported by the second release terminal; and a sixth parameter may be, for example, a scaling factor.

In an implementation, for the second release terminal, a value of the fourth parameter may be 1, 2, 4, 6 or 8. When the value of the fourth parameter is 8, it means that the modulation order used in the calculation of the peak data rate is 2⁸ = 256QAM. When the value of the fourth parameter is 6, it means that the modulation order used in the calculation of the peak data rate is 2⁶ = 64QAM.

In an implementation, for the second release terminal, a value of the fifth parameter may be 1 or 2. It should be noted that the fifth parameter is the maximum number of uplink MIMO layers supported by the terminal. For the second release terminal, an actual maximum number of uplink MIMO layers supported by the second release terminal will not be 2. That is, if the second release terminal reports the fifth parameter, the reported fifth parameter will only be 1, not 2. However, in the present disclosure, the value of the fifth parameter may be set to 2. When the second release terminal does not report the fifth parameter, the network device may optionally assume that the value of the fifth parameter used to calculate the uplink peak data rate in the second release is 2. In this case, the value of the fifth parameter is 2, which only represents that the calculation of the uplink peak data rate in the second release is based on the maximum number of uplink MIMO layers supported by the second release terminal being 2, and does not represent that the maximum number of uplink MIMO layers actually supported by the second release terminal is 2.

In an implementation, for the second release terminal, a value of the sixth parameter may be 1, 0.8, 0.75 or 0.4. That is, the scaling factor of the second release terminal may be 1, 0.8, 0.75 or 0.4.

In an implementation, in the embodiment of FIG. 2D, step 2401 described above may be performed or not, i.e., it may be performed or may not be performed.

Step 2402, the network device determines at least one of the fourth parameter, the fifth parameter, or the sixth parameter.

When the second release terminal reports the fourth parameter, the fifth parameter, and the sixth parameter, the network device may directly determine the fourth parameter, the fifth parameter, and the sixth parameter based on the report from the second release terminal. When the second release terminal reports any one or two of the fourth parameter, the fifth parameter, or the sixth parameter, the network device needs to determine the fourth parameter, the fifth parameter, and the sixth parameter that the second release terminal does not report; when the second release terminal does not report the fourth parameter, the fifth parameter, and the sixth parameter, the network device needs to determine the fourth parameter, the fifth parameter, and the sixth parameter.

In some embodiments, the network device may first determine the fifth parameter. In some embodiments, when determining the fifth parameter, the network device may first determine, for the same second release terminal, whether a first product value of the first parameter, the second parameter, and the third parameter is required to be the same as a second product value of the fourth parameter, the fifth parameter, and the sixth parameter. If the first and second product values are required to be different for the same second release terminal, then the fifth parameter is set to 1 by default when the second release terminal does not report the fifth parameter. Alternatively, if the second release terminal reports the fifth parameter indicating the maximum number of uplink MIMO layers being 1 layer, then the fifth parameter is defaulted to 1. If the first and second product values are required to be the same for the same second release terminal, then the fifth parameter is directly defaulted to 2, when the second release terminal reports the second parameter indicating the maximum number of downlink MIMO layers being 2 layers. Then, if the second release terminal does not report at least one of the fourth parameter or the sixth parameter, the network device may determine the fourth and sixth parameters. In some embodiments, when determining the fourth and sixth parameters, the network device may determine, for the same second release terminal, whether the first product value of the first parameter, the second parameter, and the third parameter is required to be the same as the second product value of the fourth parameter, the fifth parameter, and the sixth parameter. If, for the same second release terminal, the first product value is required to be the same as the second product value, the network device may determine at least one of the fourth parameter or the sixth parameter based on the second parameter, where the second, fourth, and sixth parameters are required to meet a second condition. If, for the same second release terminal, the first product value is required to be different from the second product value, the network device may determine at least one of the fourth parameter or the sixth parameter based on the fifth parameter, where the fourth parameter, the fifth parameter, and the sixth parameter are required to meet a third condition.

In an implementation, the second condition described above may include at least one of:
the second release terminal supports a first FG, and a product of the second parameter, the fourth parameter, and the sixth parameter is equal to the first value; or
the second release terminal supports the second FG, and a product of the second parameter, the fourth parameter, and the sixth parameter is equal to the second value or the third value, where in response to the second parameter indicating that the maximum number of downlink MIMO layers supported by the second release terminal is 1 layer, the product of the second parameter, the fourth parameter, and the sixth parameter is equal to the second value, and in response to the second parameter indicating that the maximum number of downlink MIMO layers supported by the second release terminal is 2 layers, the product of the second parameter, the fourth parameter, and the sixth parameter is equal to the third value.

In some embodiments, when the second release terminal supports the first FG, the network device is required to ensure that the product of the final determined fourth parameter, sixth parameter and second parameter is equal to the first value when determining the fourth parameter and sixth parameter. In some other embodiments, when the second release terminal supports the second FG, the network device should ensure that the product of the fourth parameter, the sixth parameter, and the second parameter is equal to the second value or the third value when determining the fourth parameter and the sixth parameter. When the maximum number of MIMO layers supported by the second release terminal is 1 layer, the product of the determined fourth parameter, the sixth parameter, and the second parameter is equal to the second value; and when the maximum number of MIMO layers supported by the second release terminal is 2 layer, the product of the determined fourth parameter, the sixth parameter, and the second parameter is equal to the third value.

In an implementation, the third condition described above may include at least one of:
the second release terminal supports the first FG, and a product of the fourth parameter, the fifth parameter, and the sixth parameter is equal to the first value; or
the second release terminal supports the second FG, and a product of the fourth parameter, the fifth parameter, and the sixth parameter is equal to the second value, where in response to the fifth parameter indicating that the maximum number of uplink MIMO layers supported by the second release terminal is 1 layer, the product of the fourth parameter, the fifth parameter, and the sixth parameter is equal to the second value.

In some embodiments, when the second release terminal supports the first FG, the network device is required to ensure that the product of the final determined fourth parameter, sixth parameter and fifth parameter is equal to the first value when determining the fourth parameter and the sixth parameter. In some other embodiments, when the second release terminal supports the second FG, the network device is required to ensure that the product of the fourth parameter, sixth parameter and fifth parameter is equal to the second value when determining the fourth and sixth parameters. When the maximum number of MIMO layers supported by the second release terminal is 1 layer, the product of the fourth, sixth and fifth parameters is equal to the second value.

In an implementation, the first FG may be FG 48-1, the second FG may be FG 48-2, the first value may be 3.2, the second value may be 0.75, and the third value may be 0.8.

As may be seen from the above, the second and third conditions are similar to the first condition in the aforementioned embodiment, except that the defined parameters are different. The first condition in the aforementioned embodiments defines the first, second, and third parameters, while the second condition defines the second, fourth, and sixth parameters, and the third condition defines the fourth, fifth, and sixth parameter. Therefore, the specific methods for determining the fourth and sixth parameters based on the second parameter and the second condition, as well as the specific methods for determining the fourth and sixth parameters based on the fifth parameter and the third condition, may be found in the foregoing embodiments.

Step 2403, the network device calculates the uplink peak data rate of the second release terminal based on the determined fourth parameter, fifth parameter, and sixth parameter.

In an implementation, the network device may calculate the uplink peak data rate of the second release terminal based on the parameter(s) reported by the second release terminal in step 2401 and/or the parameter(s) determined in step 2402. For example, assuming that in step 2401 above, the second release terminal reports the fifth parameter as 1 layer, but does not report the fourth and sixth parameters; meanwhile, in step 2402 above, the network device determines based on the first condition that the fourth parameter is 4 and the sixth parameter is 0.8. The network device may then calculate the uplink peak data rate of the second release terminal based on the fourth parameter being 4, the fifth parameter being 1 layer, and the sixth parameter being 0.8.

Step 2404, the network device schedules an uplink resource for the second release terminal based on the uplink peak data rate of the second release terminal.

The method for determination involved in embodiments of the present disclosure may include at least one of steps S2401 to S2404. For example, step S2401 may be implemented as an independent embodiment, step S2402 may be implemented as an independent embodiment, step S2403 may be implemented as an independent embodiment, and steps S2401+S2402 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

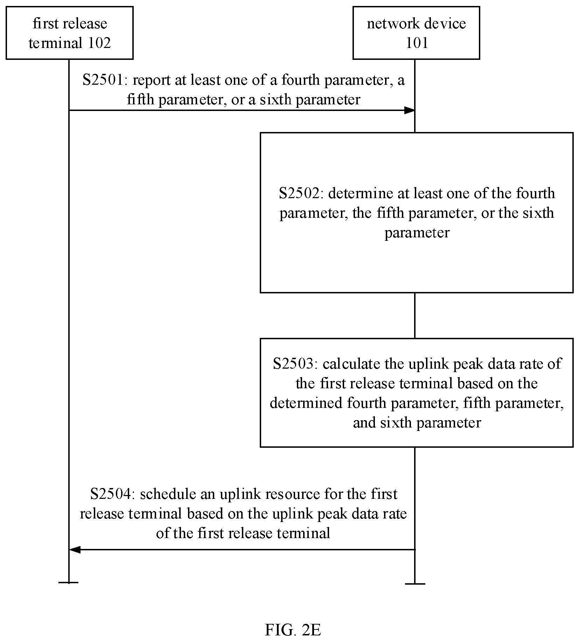

Fig. 2E is an interactive schematic diagram illustrating a method for determination according to an embodiment of the present disclosure. As shown in Fig. 2E, embodiments of the present disclosure are related to a method for determination applicable to a communication system 100. The method includes the following steps.

Step 2501, a first release terminal reports at least one of a fourth parameter, a fifth parameter, or a sixth parameter.

In an implementation, for a detailed description of the first release, reference may be made to the descriptions of the above embodimentss.

In an implementation, the first release terminal may report at least one of the fourth parameter, the fifth parameter, or the sixth parameter to the network device. The network device may receive at least one of the fourth parameter, the fifth parameter, or the sixth parameter reported by the first release terminal.

In an implementation, the fourth parameter, the fifth parameter, and the sixth parameter may be used to calculate a peak uplink data rate of the first release terminal.

In some embodiments, the first release terminal may be configured to report the fourth parameter, the fifth parameter, and the sixth parameter. For example, it may be configured by a network device to report the fourth parameter, the fifth parameter, and the sixth parameter. Each of the fourth parameter, the fifth parameter, or the sixth parameter has a corresponding reporting type, which may include mandatory reporting or optional reporting. For detailed description of the mandatory reporting, the optional reporting, the fourth parameter, the fifth parameter, and the sixth parameter, reference may be made to the above embodiments.

In an implementation, in the embodiment of Fig. 2E, the premise is that the reporting type of at least one of the fourth parameter, the fifth parameter, or the sixth parameter is optional reporting. In an implementation, when the reporting type of at least one of the fourth parameter, the fifth parameter, or the sixth parameter is the optional reporting, the first release terminal may report the fourth parameter, the fifth parameter, and the sixth parameter; or the first release terminal may report any one or any two of the fourth parameter, the fifth parameter, or the sixth parameter; or the first release terminal may not report the fourth parameter, the fifth parameter, and the sixth parameter.

In an implementation, in the embodiment of Fig. 2E, step 2501 described above may be performed or not, i.e., step 2501 may be performed or may not be performed.

Step 2502, the network device determines at least one of the fourth parameter, the fifth parameter, or the sixth parameter.

When the first release terminal reports the fourth parameter, the fifth parameter, and the sixth parameter, the network device may directly determine the fourth parameter, the fifth parameter, and the sixth parameter based on the report from the first release terminal. When the first release terminal reports any one or two of the fourth parameter, the fifth parameter, or the sixth parameter, the network device needs to determine the fourth parameter, the fifth parameter, and the sixth parameter that the first release terminal does not report; when the first release terminal does not report the fourth parameter, the fifth parameter, and the sixth parameter, the network device needs to determine the fourth parameter, the fifth parameter, and the sixth parameter.

In some embodiments, when the first release terminal is in an FR1 band, the method that the network device determines at least one of the fourth parameter, the fifth parameter, or the sixth parameter may include:
in response to the first release terminal not reporting the fourth parameter, and if the first release terminal supports 256QAM, determining the fourth parameter as 256QAM; otherwise (for example, if the first release terminal supports a QAM other than 256), determining the fourth parameter as 64QAM; or
in response to the first release terminal not reporting the fourth parameter, determining the fourth parameter as 64QAM.

Step 2503, the network device calculates the uplink peak data rate of the first release terminal based on the determined fourth parameter, fifth parameter, and sixth parameter.

In an implementation, the network device may calculate the uplink peak data rate of the first release terminal based on the parameter(s) reported by the first release terminal in step 2501 and/or the parameter(s) determined in step 2502. For a detailed description to this part, reference may be made to step 2103 above.

Step 2504, the network device schedules an uplink resource for the first release terminal based on the uplink peak data rate of the first release terminal.

The method for determination involved in embodiments of the present disclosure may include at least one of steps S2501 to S2504. For example, step S2501 may be implemented as an independent embodiment, step S2502 may be implemented as an independent embodiment, step S2503 may be implemented as an independent embodiment, and steps S2501+S2502 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

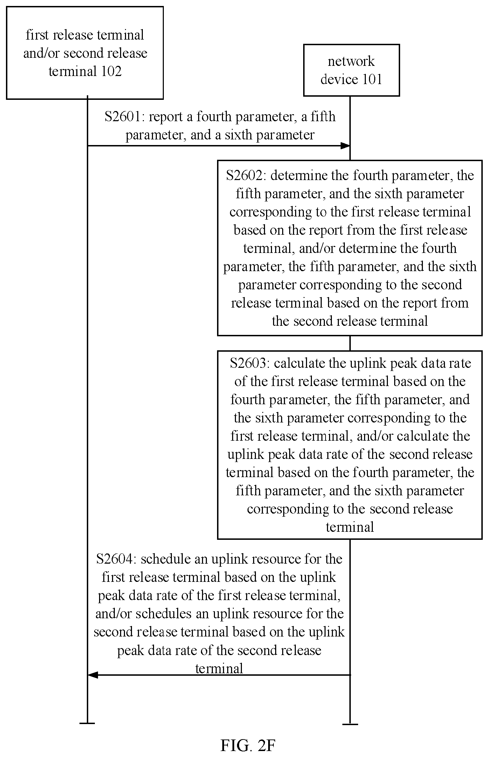

Fig. 2F is an interactive schematic diagram illustrating a method for determination according to an embodiment of the present disclosure. As shown in Fig. 2F, embodiments of the present disclosure are related to a method for determination applicable to a communication system 100. The method includes the following steps.

Step 2601, a first release terminal and/or a second release terminal reports a fourth parameter, a fifth parameter, and a sixth parameter.

In an implementation, in the embodiment of Fig. 2F, the premise is that reporting types of the fourth parameter, the fifth parameter, and the sixth parameter are mandatory reporting.

In some embodiments, the first release terminal and/or the second release terminal may support a first FG and/or a second FG.

Step 2602, a network device determines the fourth parameter, the fifth parameter, and the sixth parameter corresponding to the first release terminal based on the report from the first release terminal, and/or determines the fourth parameter, the fifth parameter, and the sixth parameter corresponding to the second release terminal based on the report from the second release terminal.

In an implementation, the fourth parameter, the fifth parameter, and the sixth parameter corresponding to the first release terminal are used to calculate the uplink peak data rate of the first release terminal, and the fourth parameter, the fifth parameter, and the sixth parameter corresponding to the second release terminal are used to calculate the uplink peak data rate of the second release terminal.

Step 2603, the network device calculates the uplink peak data rate of the first release terminal based on the fourth parameter, the fifth parameter, and the sixth parameter corresponding to the first release terminal, and/or calculates the uplink peak data rate of the second release terminal based on the fourth parameter, the fifth parameter, and the sixth parameter corresponding to the second release terminal.

Step 2604, the network device schedules an uplink resource for the first release terminal based on the uplink peak data rate of the first release terminal, and/or schedules an uplink resource for the second release terminal based on the uplink peak data rate of the second release terminal.

The method for determination involved in embodiments of the present disclosure may include at least one of steps S2601 to S2604. For example, step S2601 may be implemented as an independent embodiment, step S2602 may be implemented as an independent embodiment, step S2603 may be implemented as an independent embodiment, and steps S2601+S2602 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

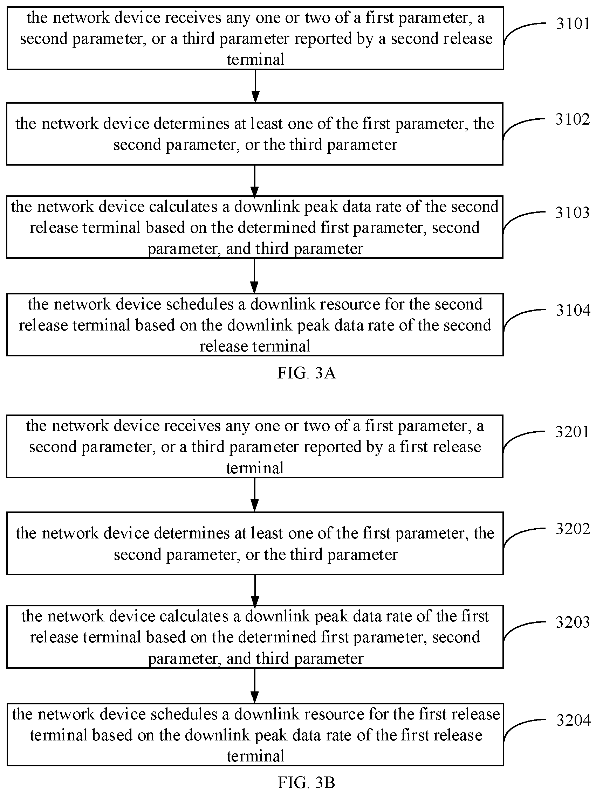

Fig. 3A is an interactive schematic diagram illustrating a method for determination according to an embodiment of the present disclosure. As shown in Fig. 3A, embodiments of the present disclosure are related to a method for determination applicable to a network device 101. The method includes the following steps.

Step 3101, the network device receives any one or two of a first parameter, a second parameter, or a third parameter reported by a second release terminal.

In an implementation, step 3101 is a step that may be executed or not. When step 3101 is not executed, it means that the second release terminal does not report the first parameter, the second parameter, and the third parameter to the network device.

Step 3102, the network device determines at least one of the first parameter, the second parameter, or the third parameter.

Step 3103, the network device calculates a downlink peak data rate of the second release terminal based on the determined first parameter, second parameter, and third parameter.

Step 3104, the network device schedules a downlink resource for the second release terminal based on the downlink peak data rate of the second release terminal.

For detailed descriptions of steps 3101-3104, reference may be made to the descriptions of the above embodiments.

The method for determination involved in embodiments of the present disclosure may include at least one of steps S3101 to S3104. For example, step S3101 may be implemented as an independent embodiment, step S3102 may be implemented as an independent embodiment, and steps S3101+S3102 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 3B is an interactive schematic diagram illustrating a method for determination according to an embodiment of the present disclosure. As shown in Fig. 3B, embodiments of the disclosure are related to a method for determination applicable to a network device 101. The method includes the following steps.

Step 3201, the network device receives any one or two of a first parameter, a second parameter, or a third parameter reported by a first release terminal.

In an implementation, step 3201 is a step that may be executed or not. When step 3201 is not executed, it means that the first release terminal does not report the first parameter, the second parameter, and the third parameter to the network device.

Step 3202, the network device determines at least one of the first parameter, the second parameter, or the third parameter.

Step 3203, the network device calculates a downlink peak data rate of the first release terminal based on the determined first parameter, second parameter, and third parameter.

Step 3204, the network device schedules a downlink resource for the first release terminal based on the downlink peak data rate of the first release terminal.

For detailed descriptions of steps 3201-3204, reference may be made to the descriptions of the above embodiments.

The method for determination involved in embodiments of the present disclosure may include at least one of steps S3201 to S3204. For example, step S3201 may be implemented as an independent embodiment, step S3202 may be implemented as an independent embodiment, and steps S3201+S3202 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

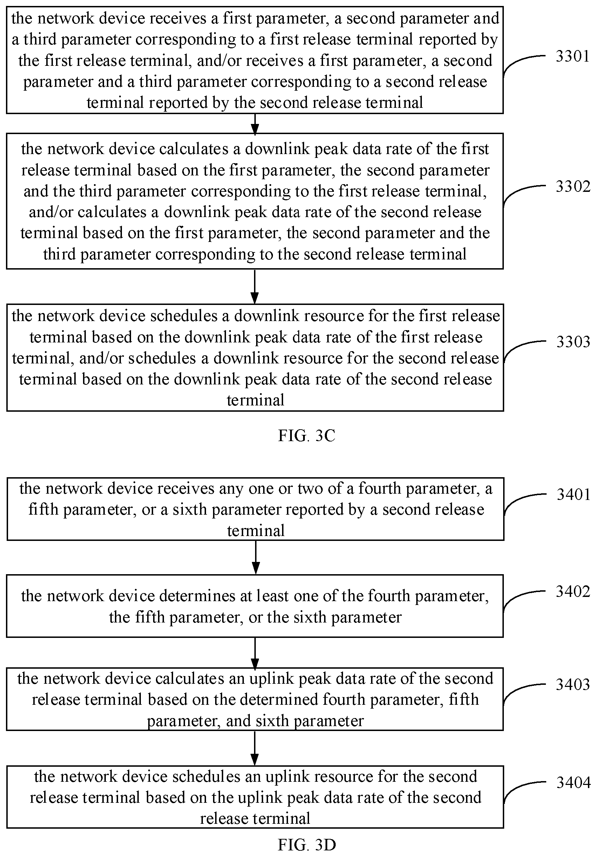

Fig. 3C is an interactive schematic diagram illustrating a method for determination according to an embodiment of the present disclosure. As shown in Fig. 3C, embodiments of the present disclosure are related to a method for determination applicable to a network device 101. The method includes the following steps.

Step 3301, the network device receives a first parameter, a second parameter and a third parameter corresponding to a first release terminal reported by the first release terminal, and/or receives a first parameter, a second parameter and a third parameter corresponding to a second release terminal reported by the second release terminal.

Step 3302, the network device calculates a downlink peak data rate of the first release terminal based on the first parameter, the second parameter and the third parameter corresponding to the first release terminal, and/or calculates a downlink peak data rate of the second release terminal based on the first parameter, the second parameter and the third parameter corresponding to the second release terminal.

Step 3303, the network device schedules a downlink resource for the first release terminal based on the downlink peak data rate of the first release terminal, and/or schedules a downlink resource for the second release terminal based on the downlink peak data rate of the second release terminal.

For detailed descriptions of steps 3301-3303, reference may be made to the descriptions of the above embodiments.

The method for determination involved in embodiments of the present disclosure may include at least one of steps S3301 to S3303. For example, step S3301 may be implemented as an independent embodiment, step S3302 may be implemented as an independent embodiment, and steps S3301+S3302 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 3D is an interactive schematic diagram illustrating a method for determination according to an embodiment of the present disclosure. As shown in Fig. 3D, embodiments of the present disclosure are related to a method for determination applicable to a network device 101. The method includes the following steps.

Step 3401, the network device receives any one or two of a fourth parameter, a fifth parameter, or a sixth parameter reported by a second release terminal.

In an implementation, step 3401 is a step that may be executed or not. When step 3401 is not executed, it means that the second release terminal does not report the first parameter, the second parameter, and the third parameter to the network device.

Step 3402, the network device determines at least one of the fourth parameter, the fifth parameter, or the sixth parameter.

Step 3403, the network device calculates an uplink peak data rate of the second release terminal based on the determined fourth parameter, fifth parameter, and sixth parameter.

Step 3404, the network device schedules an uplink resource for the second release terminal based on the uplink peak data rate of the second release terminal.

For detailed descriptions of steps 3401-3404, reference may be made to the descriptions of the above embodiments.

The method for determination involved in embodiments of the present disclosure may include at least one of steps S3401 to S3404. For example, step S3401 may be implemented as an independent embodiment, step S3402 may be implemented as an independent embodiment, and steps S3401+S3402 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

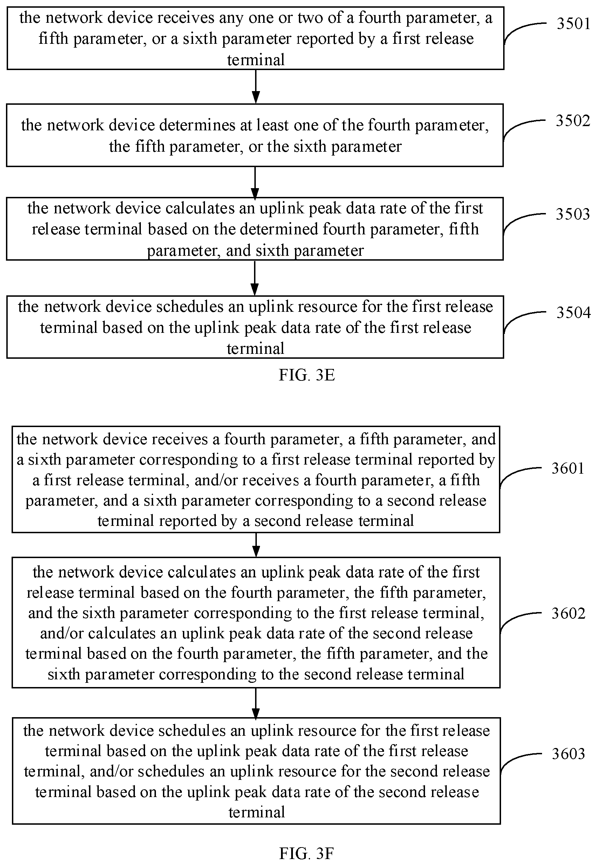

Fig. 3E is an interactive schematic diagram illustrating a method for determination according to an embodiment of the present disclosure. As shown in Fig. 3E, embodiments of the present disclosure are related to a method for determination applicable to a network device 101. The method includes the following steps.

Step 3501, the network device receives any one or two of a fourth parameter, a fifth parameter, or a sixth parameter reported by a first release terminal.

In an implementation, step 3501 is a step that may be executed or not. When step 3501 is not executed, it means that the first release terminal does not report the first parameter, the second parameter, and the third parameter to the network device.

Step 3502, the network device determines at least one of the fourth parameter, the fifth parameter, or the sixth parameter.

Step 3503, the network device calculates an uplink peak data rate of the first release terminal based on the determined fourth parameter, fifth parameter, and sixth parameter.

Step 3504, the network device schedules an uplink resource for the first release terminal based on the uplink peak data rate of the first release terminal.

For detailed descriptions of steps 3501-3504, reference may be made to the descriptions of the above embodiments.

The method for determination involved in embodiments of the present disclosure may include at least one of steps S3501 to S3504. For example, step S3501 may be implemented as an independent embodiment, step S3502 may be implemented as an independent embodiment, and steps S3501+S3502 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 3F is an interactive schematic diagram illustrating a method for determination according to an embodiment of the present disclosure. As shown in Fig. 3F, embodiments of the present disclosure are related to a method for determination for network device 101. The method includes the following steps.

Step 3601, the network device receives a fourth parameter, a fifth parameter, and a sixth parameter corresponding to a first release terminal reported by a first release terminal, and/or receives a fourth parameter, a fifth parameter, and a sixth parameter corresponding to a second release terminal reported by a second release terminal.

Step 3602, the network device calculates an uplink peak data rate of the first release terminal based on the fourth parameter, the fifth parameter, and the sixth parameter corresponding to the first release terminal, and/or calculates an uplink peak data rate of the second release terminal based on the fourth parameter, the fifth parameter, and the sixth parameter corresponding to the second release terminal.

Step 3603, the network device schedules an uplink resource for the first release terminal based on the uplink peak data rate of the first release terminal, and/or schedules an uplink resource for the second release terminal based on the uplink peak data rate of the second release terminal.

For detailed descriptions of steps 3601-3603, reference may be made to the descriptions of the above embodiments.

The method for determination involved in embodiments of the present disclosure may include at least one of steps S3601 to S3603. For example, step S3601 may be implemented as an independent embodiment, step S3602 may be implemented as an independent embodiment, and steps S3601+S3602 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

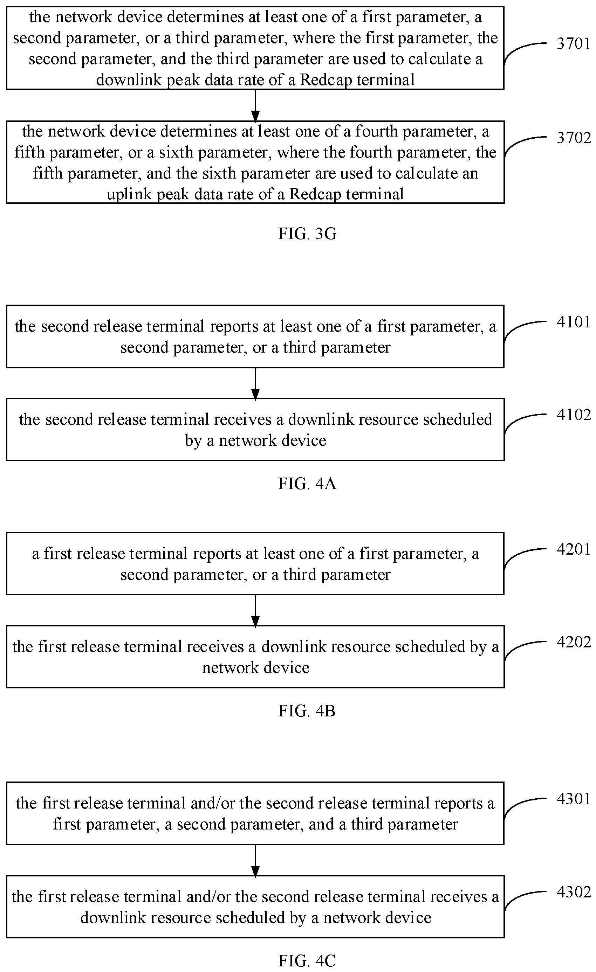

Fig. 3G is an interactive schematic diagram illustrating a method for determination according to an embodiment of the present disclosure. As shown in Fig. 3G, embodiments of the present disclosure are related to a method for determination applicable to a network device 101. The method including at least one of the following steps.

Step 3701, the network device determines at least one of a first parameter, a second parameter, or a third parameter, where the first parameter, the second parameter, and the third parameter are used to calculate a downlink peak data rate of a Redcap terminal.

Step 3702, the network device determines at least one of a fourth parameter, a fifth parameter, or a sixth parameter, where the fourth parameter, the fifth parameter, and the sixth parameter are used to calculate an uplink peak data rate of a Redcap terminal.

In an implementation, the first parameter and the fourth parameter are modulation orders, the second parameter is a maximum number of downlink MIMO layers supported by the Redcap terminal, the fifth parameter is a maximum number of uplink MIMO layers supported by the Redcap terminal, and the third parameter and the sixth parameter are scaling factors.

In an implementation, reporting types of the first parameter, the second parameter, and the third parameter are mandatory reporting or optional reporting; and reporting types of the fourth parameter, the fifth parameter, and the sixth parameter are mandatory reporting or optional reporting;
where in response to the reporting types of the first parameter, the second parameter, and the third parameter being the mandatory reporting, the first parameter, the second parameter, and the third parameter are reported by the Redcap terminal to the network device; or
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In an implementation, the Redcap terminal includes a first release terminal or a second release terminal, where a first release precedes a second release.

In an implementation, determining at least one of the first parameter, the second parameter, or the third parameter includes:
receiving the first parameter, the second parameter, and the third parameter reported by the Redcap terminal, in response to the reporting types of the first parameter, the second parameter, and the third parameter being the mandatory reporting, and
determining at least one of the fourth parameter, the fifth parameter, or the sixth parameter includes:
   receiving the fourth parameter, the fifth parameter, and the sixth parameter reported by the Redcap terminal, in response to the reporting types of the fourth parameter, the fifth parameter, and the sixth parameter being the mandatory reporting.

In an implementation, the Redcap terminal is the second release terminal, and determining at least one of the first parameter, the second parameter, or the third parameter includes:
in response to the second release terminal reporting any one or two of the first parameter, the second parameter, or the third parameter, determining a parameter not reported by the second release terminal among the first parameter, the second parameter, and the third parameter; or
in response to the second release terminal not reporting the first parameter, the second parameter, and the third parameter, determining the first parameter, the second parameter, and the third parameter,
where the first parameter, the second parameter, and the third parameter meet a first condition.

In an implementation, the first condition includes at least one of:
the second release terminal supports a first FG, and a product of the first parameter, the second parameter, and the third parameter is equal to a first value; or
the second release terminal supports a second FG, and a product of the first parameter, the second parameter, and the third parameter is equal to a second value or a third value, where in response to the maximum number of downlink MIMO layers supported by the second release terminal being 1 layer, the product of the first parameter, the second parameter, and the third parameter is equal to the second value, and in response to the maximum number of downlink MIMO layers supported by the second release terminal being 2 layers, the product of the first parameter, the second parameter, and the third parameter is equal to the third value.

In an implementation, the first FG is FG 48-1, the second FG is FG 48-2, the first value is 3.2, the second value is 0.75, and the third value is 0.8.

In an implementation, the Redcap terminal is the second release terminal, the second release terminal supports the first FG, and determining at least one of the first parameter, the second parameter, or the third parameter includes at least one of:
in response to the second release terminal not reporting the second parameter, defaulting the second parameter to 1;
in response to the second release terminal not reporting the first parameter, and the second parameter indicating that the maximum number of downlink MIMO layers supported by the second release terminal is 1 layer, determining the first parameter as 4 or 8;
in response to the second release terminal not reporting the third parameter, and the second parameter indicating that the maximum number of downlink MIMO layers supported by the second release terminal is 1 layer, determining the third parameter as 0.8 or 0.4;
in response to the second release terminal not reporting the first parameter, the second parameter indicating that the maximum number of downlink MIMO layers supported by the second release terminal is 2 layers, and the third parameter reported by the second release terminal being 0.4, determining the first parameter as 4;
in response to the second release terminal not reporting the first parameter, the second parameter indicating that the maximum number of downlink MIMO layers supported by the second release terminal is 2 layers, and the third parameter reported by the second release terminal being 0.8, determining the first parameter as 2;
in response to the second release terminal not reporting the first parameter and the third parameter, and the second parameter indicating that the maximum number of downlink MIMO layers supported by the second release terminal is 2 layers, determining the first parameter as 4 and the third parameter as 0.4, or determining the first parameter as 2 and the third parameter as 0.8;
in response to the second release terminal not reporting the third parameter, the second parameter indicating that the maximum number of downlink MIMO layers supported by the second release terminal is 2 layers, and the first parameter reported by the second release terminal being 4, determining the third parameter as 0.4; or
in response to the second release terminal not reporting the third parameter, the second parameter indicating that the maximum number of downlink MIMO layers supported by the second release terminal is 2 layers, and the first parameter reported by the second release terminal being 2, determining the third parameter as 0.8.

In an implementation, the Redcap terminal is the second release terminal, the second release terminal supports the second FG, and determining at least one of the first parameter, the second parameter, or the third parameter includes at least one of:
in response to the second release terminal not reporting the first parameter, determining the first parameter as 1;
in response to the second release terminal not reporting the second parameter, determining the second parameter as 1;
in response to the second release terminal not reporting the third parameter, and the second parameter indicating that the maximum number of downlink MIMO layers supported by the second release terminal is 1 layer, determining the third parameter as 0.75; or
in response to the second release terminal not reporting the third parameter, and the second parameter indicating that the maximum number of downlink MIMO layers supported by the second release terminal is 2 layers, determining the third parameter as 0.4.

In an implementation, the Redcap terminal is the first release terminal, the first release terminal is in an FR1 band, and determining at least one of the first parameter, the second parameter, or the third parameter includes:
in response to the first release terminal not reporting the first parameter, and the first release terminal reporting that 256QAM is supported, determining the first parameter as the 256QAM; otherwise, determining the first parameter as 64QAM; or
in response to the first release terminal not reporting the first parameter, determining the first parameter as 64QAM.

In an implementation, the Redcap terminal is the second release terminal, and determining at least one of the fourth parameter, the fifth parameter, or the sixth parameter includes at least one of:
determining the fifth parameter; or
in response to the second release terminal not reporting the fourth parameter and/or the sixth parameter, determining, for the same second release terminal, whether a first product value of the first parameter, the second parameter, and the third parameter is required to be the same as a second product value of the fourth parameter, the fifth parameter, and the sixth parameter;
if, for the same second release terminal, the first product value is required to be the same as the second product value, determining the fourth parameter and/or the sixth parameter based on the second parameter, where the second parameter, the fourth parameter and the sixth parameter are required to meet a second condition; or
if, for the same second release terminal, the first product value is required to be different from the second product value, determining the fourth parameter and/or the sixth parameter based on the fifth parameter, where the fourth parameter, the fifth parameter and the sixth parameter are required to meet a third condition.

In an implementation, determining the fifth parameter includes at least one of:
in response to the second release terminal not reporting the fifth parameter, defaulting the fifth parameter to 1;
in response to the second release terminal reporting the fifth parameter indicating that the maximum number of uplink MIMO layers is 1 layer, determining the fifth parameter as 1; or
in response to the second release terminal reporting the second parameter indicating that the maximum number of downlink MIMO layers is 2 layers, determining the fifth parameter as 2.

In an implementation, the second condition includes at least one of:
the second release terminal supports the first FG, and a product of the second parameter, the fourth parameter, and the sixth parameter is equal to the first value; or
the second release terminal supports the second FG, and a product of the second parameter, the fourth parameter, and the sixth parameter is equal to the second value or the third value, where in response to the second parameter indicating that the maximum number of downlink MIMO layers supported by the second release terminal is 1 layer, the product of the second parameter, the fourth parameter, and the sixth parameter is equal to the second value, and in response to the second parameter indicating that the maximum number of downlink MIMO layers supported by the second release terminal is 2 layers, the product of the second parameter, the fourth parameter, and the sixth parameter is equal to the third value.

In an implementation, the third condition includes at least one of:
the second release terminal supports the first FG, and a product of the fourth parameter, the fifth parameter, and the sixth parameter is equal to the first value; or
the second release terminal supports the second FG, and a product of the fourth parameter, the fifth parameter, and the sixth parameter is equal to the second value, where in response to the fifth parameter indicating that the maximum number of uplink MIMO layers supported by the second release terminal is 1 layer, the product of the fourth parameter, the fifth parameter, and the sixth parameter is equal to the second value.

In an implementation, the Redcap terminal is the first release terminal, the first release terminal is in an FR1 band, and determining at least one of the fourth parameter, the fifth parameter, or the sixth parameter includes:
in response to the first release terminal not reporting the fourth parameter, and the first release terminal supporting 256QAM, determining the fourth parameter as the 256QAM; otherwise, determining the fourth parameter as 64QAM; or
in response to the first release terminal not reporting the fourth parameter, determining the fourth parameter as 64QAM.

For detailed descriptions of steps 3701-3702, reference may be made to the descriptions of the above embodiments.

The method for determination involved in embodiments of the present disclosure may include at least one of steps S3701 to S3702. For example, step S3701 may be implemented as an independent embodiment, step S3702 may be implemented as an independent embodiment, and steps S3701+S3702 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4A is an interactive schematic diagram illustrating a method for determination according to an embodiment of the present disclosure. As shown in Fig. 4A, embodiments of the disclosure are related to a method for determination applicable to a second release terminal 102. The method includes the following steps.

Step 4101, the second release terminal reports at least one of a first parameter, a second parameter, or a third parameter.

Step 4102, the second release terminal receives a downlink resource scheduled by a network device.

For detailed descriptions of steps 4101-4102, reference may be made to the contents of the above embodiments.

The method for determination involved in embodiments of the present disclosure may include at least one of steps S4101 to S4102. For example, step S4101 may be implemented as an independent embodiment, and step S4102 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4B is an interactive schematic diagram illustrating a method for determination according to an embodiment of the present disclosure. As shown in Fig. 4B, embodiments of the disclosure are related to a method for determination applicable to a first release terminal 102. The method includes the following steps.

Step 4201, a first release terminal reports at least one of a first parameter, a second parameter, or a third parameter.

Step 4202, the first release terminal receives a downlink resource scheduled by a network device.

For detailed descriptions of steps 4201-4202, reference may be made to the contents of the above embodiments.

The method for determination involved in embodiments of the present disclosure may include at least one of steps S4201 to S4202. For example, step S4201 may be implemented as an independent embodiment, and step S4202 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4C is an interactive schematic diagram illustrating a method for determination according to an embodiment of the present disclosure. As shown in Fig. 4C, embodiments of the present disclosure are related to a method for determination applicable to a first release terminal and/or a second release terminal 102. The method includes the following steps.

Step 4301, the first release terminal and/or the second release terminal reports a first parameter, a second parameter, and a third parameter.

Step 4302, the first release terminal and/or the second release terminal receives a downlink resource scheduled by a network device.

For detailed descriptions of steps 4301-4302, reference may be made to the contents of the above embodiments.

The method for determination involved in embodiments of the present disclosure may include at least one of steps S4301 to S4302. For example, step S4301 may be implemented as an independent embodiment, and step S4302 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

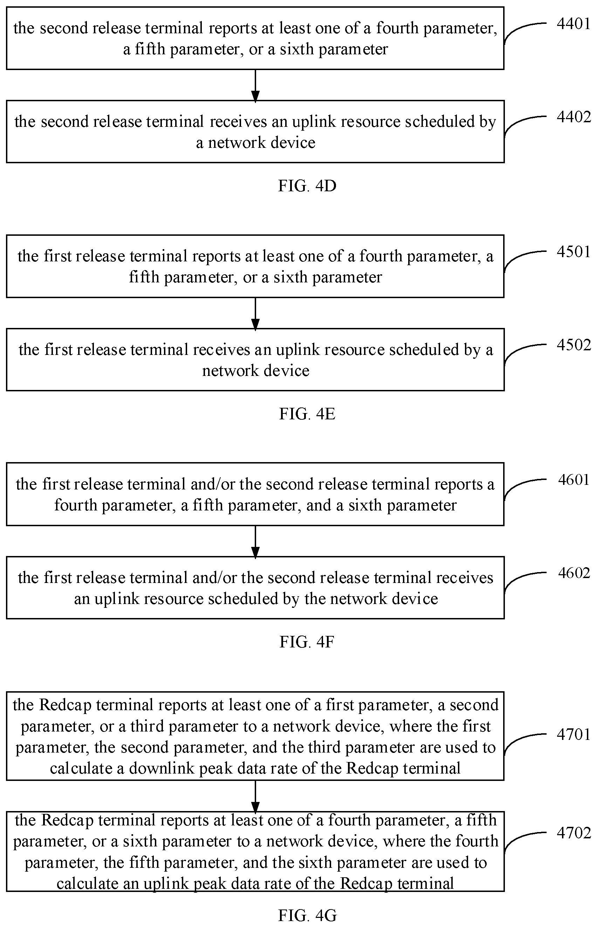

Fig. 4D is an interactive schematic diagram illustrating a method for determination according to an embodiment of the present disclosure. As shown in Fig. 4D, embodiments of the present disclosure are related to a method for determination applicable to a second release terminal 102. The method includes the following steps.

Step 4401, the second release terminal reports at least one of a fourth parameter, a fifth parameter, or a sixth parameter.

Step 4402, the second release terminal receives an uplink resource scheduled by a network device.

For detailed descriptions of steps 4401-4402, reference may be made to the contents of the above embodiments.

The method for determination involved in embodiments of the present disclosure may include at least one of steps S4401 to S4402. For example, step S4401 may be implemented as an independent embodiment, and step S4402 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4E is an interactive schematic diagram illustrating a method for determination according to an embodiment of the present disclosure. As shown in Fig. 4E, embodiments of the present disclosure embodiment are related to a method for determination applicable to a first release terminal 102. The method includes the following steps.

Step 4501, the first release terminal reports at least one of a fourth parameter, a fifth parameter, or a sixth parameter.

Step 4502, the first release terminal receives an uplink resource scheduled by a network device.

For detailed descriptions of steps 4501-4502, reference may be made to the contents of the above embodiments.

The method for determination involved in embodiments of the present disclosure may include at least one of steps S4501 to S4502. For example, step S4501 may be implemented as an independent embodiment, and step S4502 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4F is an interactive schematic diagram illustrating a method for determination according to an embodiment of the present disclosure. As shown in Fig. 4F, embodiments of the present disclosure are related to a method for determination applicable to a first release terminal and/or a second release terminal 102. The method includes the following steps.

Step 4601, the first release terminal and/or the second release terminal reports a fourth parameter, a fifth parameter, and a sixth parameter.

Step 4602, the first release terminal and/or the second release terminal receives an uplink resource scheduled by the network device.

For detailed descriptions of steps 4601-4602, reference may be made to the contents of the above embodiments.

The method for determination involved in embodiments of the present disclosure may include at least one of steps S4601 to S4602. For example, step S4601 may be implemented as an independent embodiment, and step S4602 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

Fig. 4G is an interactive schematic diagram illustrating a method for determination according to an embodiment of the present disclosure. As shown in Fig. 4G, embodiments of the present disclosure are related to a method for determination applicable to a Redcap terminal 102. The method includes the following steps.

Step 4701, the Redcap terminal reports at least one of a first parameter, a second parameter, or a third parameter to a network device, where the first parameter, the second parameter, and the third parameter are used to calculate a downlink peak data rate of the Redcap terminal.

Step 4702, the Redcap terminal reports at least one of a fourth parameter, a fifth parameter, or a sixth parameter to a network device, where the fourth parameter, the fifth parameter, and the sixth parameter are used to calculate an uplink peak data rate of the Redcap terminal.

In an implementation, the first parameter and the fourth parameter are modulation orders, the second parameter is a maximum number of downlink MIMO layers supported by the Redcap terminal, the fifth parameter is a maximum number of uplink MIMO layers supported by the Redcap terminal, and the third parameter and the sixth parameter are scaling factors.

In an implementation, reporting types of the first parameter, the second parameter, and the third parameter are mandatory reporting or optional reporting; and reporting types of the fourth parameter, the fifth parameter, and the sixth parameter are mandatory reporting or optional reporting;
where in response to the reporting types of the first parameter, the second parameter, and the third parameter being the mandatory reporting, the first parameter, the second parameter, and the third parameter are reported by the Redcap terminal to the network device; or
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

In an implementation, the Redcap terminal may include a first release terminal or a second release terminal, where the first release precedes the second release.

For detailed descriptions of steps 4701-4702, reference may be made to the contents of the above embodiments.

The method for determination involved in embodiments of the present disclosure may include at least one of steps S4701 to S4702. For example, step S4701 may be implemented as an independent embodiment, and step S4702 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

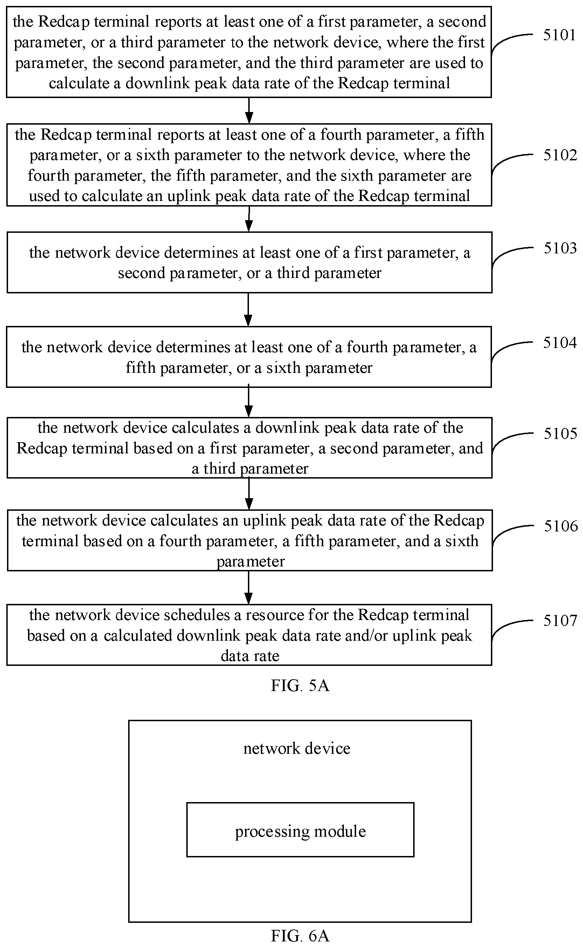

Fig. 5A is an interactive schematic diagram illustrating a method for determination according to an embodiment of the present disclosure. As shown in Figure 5A, embodiments of the present disclosure are related to a method for determination applicable to a communication system including a terminal and a network device. The method includes at least one of:
Step 5101, the Redcap terminal reports at least one of a first parameter, a second parameter, or a third parameter to the network device, where the first parameter, the second parameter, and the third parameter are used to calculate a downlink peak data rate of the Redcap terminal;
Step 5102, the Redcap terminal reports at least one of a fourth parameter, a fifth parameter, or a sixth parameter to the network device, where the fourth parameter, the fifth parameter, and the sixth parameter are used to calculate an uplink peak data rate of the Redcap terminal;
Step 5103, the network device determines at least one of a first parameter, a second parameter, or a third parameter, where the first parameter, the second parameter, and the third parameter are used to calculate a downlink peak data rate of the Redcap terminal;
Step 5104, the network device determines at least one of a fourth parameter, a fifth parameter, or a sixth parameter, where the fourth parameter, the fifth parameter, and the sixth parameter are used to calculate an uplink peak data rate of the Redcap terminal;
Step 5105, the network device calculates a downlink peak data rate of the Redcap terminal based on a first parameter, a second parameter, and a third parameter;
Step 5106, the network device calculates an uplink peak data rate of the Redcap terminal based on a fourth parameter, a fifth parameter, and a sixth parameter; or
Step 5107, the network device schedules a resource for the Redcap terminal based on a calculated downlink peak data rate and/or uplink peak data rate.

For implementations of steps 5101-5107, reference may be made to the descriptions of the above embodiments.

In some embodiments, the above methods may include the methods described in the embodiments on the communication system side, terminal side, network device side, etc., which will not be repeated here.

The method for determination involved in embodiments of the present disclosure may include at least one of steps S5101 to S5107. For example, step S5101 may be implemented as an independent embodiment, and step S5102 may be implemented as an independent embodiment, which is not limited in the present disclosure.

In implementations or embodiments, unless there is contradiction, each step may be independent, arbitrarily combined or exchanged in order, optional methods or optional examples may be arbitrarily combined, and may be arbitrarily combined with any steps of other implementations or other embodiments.

The following are example descriptions of the above methods.

Method 1: for an eRedCap terminal, mandatory reporting of Q (the first parameter mentioned above), v (the third parameter mentioned above), and f (the second parameter mentioned above) is required.

This method is valid for at least one of features: FG 48-1,or FG 48-2

Method 2: for an eRedCap terminal, reporting types of Q, v, and f are optional reporting.

Furthermore, for FG 48-1 and FG 48-2, default values of the eRedCap terminal data rate-related parameters are redefined using at least one of following methods.

For FG 48-1 (3.2: 1,0.8,0.75,0.4; 1,2; 1,2,4,6,8)
0.4,1,8; 0.8,1,4; 0.4,2,4; 0.8,2,2

When the terminal does not report a modulation order, a value of the modulation order corresponding to the calculation of the peak data rate is determined based on parameters v and f.

When the terminal supports a MIMO layer being 1, the value of the modulation order is 4.

This method is applicable to both uplink and downlink.

When the terminal supports the MIMO layer being 2, the value of the modulation order may be further determined by a value of a scaling factor:
When the reported scaling factor is 0.4, the value of the modulation order is defaulted to 4; when the reported scaling factor is 0.8, the value of the modulation order is defaulted to 2.

When the terminal does not report the scaling factor, the values of the scaling factor and modulation order may be either (0.4,4) or (0.8,2).

This method is only applicable to downlink transmission.

When the terminal does not report the maximum number of MIMO layers, its default value is 1.

### Method 2

### For FG 48-1

When the terminal supports the MIMO layer being 1, the value of the modulation order is defaulted to 0.8.

This method is applicable to both uplink and downlink.

When the terminal supports the MIMO layer being 2, the value of the scaling factor may be further determined by the value of the modulation order:

when the value of the reported modulation order is 4, the scaling factor is defaulted to 0.4; and when the value of the reported modulation order is 2, the scaling factor is defaulted to 0.8.

When the terminal does not report the scaling factor, the values of scaling factor and modulation order may be either (0.4,4) or (0.8,2).

This method is only applicable to downlink.

### For FG 48-2

When the terminal does not report the modulation order, the modulation order corresponding to the calculation of the peak data rate is 1.

When the terminal does not report the supported maximum MIMO layer, the maximum MIMO layer is defaulted to 1.

When the terminal does not report the scaling factor, the default value of the scaling factor is determined by the maximum MIMO layer supported by the terminal.

When the terminal supports the maximum MIMO layer being 1, the default value of the scaling factor is 0.75; and when the terminal supports the maximum MIMO layer being 2, the default value of the scaling factor is 0.8

The above method is also applicable to calculating uplink and downlink data rates.

### Other

For a Rel-17 RedCap terminal, a default value related to the modulation order reporting of the Rel-17 RedCap terminal is redefined.

For FR1band, if the terminal has not reported supportedModulationOrderDL, and it reports the DL supports 256QAM, then the modulation order used when calculating the peak data rate will be 256QAM; otherwise, the modulation order will be 64QAM.

The present disclosure provides the method for determining the default values of parameters related to the calculation of the peak data rate, which clarifies the eRedCap terminal's capability reporting behavior, and avoids ambiguity between the base station and the eRedCap terminal in determining the peak data rate.

Embodiments of the present disclosure also provide an apparatus for implementing any of the above methods, for example, an apparatus including units or modules for implementing the steps performed by the terminal in any of the above methods. For another example, another apparatus is also provided, which includes units or modules for implementing the steps performed by the network device (such as an access network device, a core network function node, a core network device and the like) in any of the above methods.

It should be understood that the division of each unit or module in the above apparatus is only a division of logical functions, which may be fully or partially integrated into a physical entity or physically separated in actual implementation. Moreover, the units or modules in the apparatus may be implemented in a form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

Fig. 6A is a schematic diagram of a structure of a network device provided in an embodiment of the present disclosure. As shown in Fig. 6A, the apparatus includes:
a processing module, configured to determine at least one of a first parameter, a second parameter, or a third parameter, where the first parameter, the second parameter, and the third parameter are used to calculate a downlink peak data rate of a Redcap terminal;
the processing module being further configured to determine at least one of a fourth parameter, a fifth parameter, or a sixth parameter, where the fourth parameter, the fifth parameter, and the sixth parameter are used to calculate an uplink peak data rate of the Redcap terminal.

In an implementation, the processing module is configured to perform steps related to processing performed by the network device 101 in any of the above methods. In an implementation, the network device further includes at least one of a sending module or a receiving module. The sending module is configured to perform steps related to sending performed by the network device 101 in any of the above methods, which will not be described in detail here. The receiving module described above is configured to perform steps related to receiving performed by the network device 101 in any of the above methods, which will not be described in detail here.

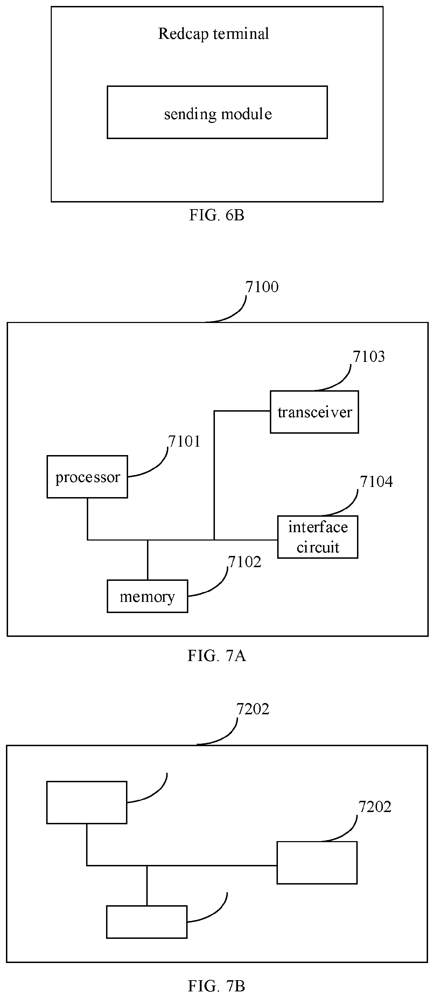

Fig. 6B is a schematic diagram of a Redcap terminal provided in an embodiment of the present disclosure. As shown in Fig. 6B, the Redcap terminal includes:
a sending module, configured to report at least one of a first parameter, a second parameter, or a third parameter to a network device, where the first parameter, the second parameter, and the third parameter are used to calculate a downlink peak data rate of the Redcap terminal;
the sending module being further configured to report at least one of a fourth parameter, a fifth parameter, or a sixth parameter to a network device, where the fourth parameter, the fifth parameter, and the sixth parameter are used to calculate an uplink peak data rate of the Redcap terminal.

In an implementation, the sending module is configured to perform steps related to sending executed by the Redcap terminal in any of the above methods. In an implementation, the Redcap terminal also includes at least one of a processing module or a receiving module. The processing module is configured to perform steps related to processing executed by the Redcap terminal in any of the above methods, which will not be described in detail here. The receiving module described above is configured to execute steps related to receiving performed by the Redcap terminal in any of the above methods, which will not be described in details here.

FIG. 7A is a block diagram illustrating a communication device 7100 provided by an embodiment of the present disclosure. The communication device 7100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 7100 may be used to implement the method described in the above-mentioned method embodiments. For details, reference may be made to the description in the above-mentioned method embodiments.

As shown in FIG. 7A, the communication device 7100 includes one or more processors 7101. The processor 7101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The processor 7101 is configured to invoke instructions to cause the communication device 7100 to perform any of the above methods.

In some embodiments, the communication device 7100 further includes one or more memories 7102 for storing instructions. In an implementation, all or part of the memory 7102 may be located outside the communication device 7100.

In some embodiments, the communication device 7100 further includes one or more transceivers 7103. In a case where the communication device 7100 includes one or more transceivers 7103, communication steps such as sending and receiving in the above methods are performed by the transceiver 7103, and other steps are performed by the processor 7101.

In some embodiments, the transceiver may include a receiver and/or a transmitter, which may be separate or integrated. In an implementation, terms such as transceiver, transceiver unit, transceiving machine, transceiver circuit, etc. may be replaced with each other, and terms such as transmitter, transmitting unit, transmitting machine, transmitting circuit and the like may be replaced with each other, and terms such as receiver, receiving unit, receiving machine, receiving circuit and the like may be replaced with each other.

In some embodiments, the communication device 7100 may include one or more interface circuits 7104. The interface circuit 7104 is connected to the memory 7102. The interface circuit 7104 may be used to receive signals from the memory 7102 or other devices, and may be used to send signals to the memory 7102 or other devices. For example, the interface circuit 7104 may read an instruction stored in the memory 7102 and send the instruction to the processor 7101.

The communication device 7100 described in the above embodiments may be a network device or a terminal device, but the scope of the communication device 7100 described in the present disclosure is not limited thereto. The structure of the communication device 7100 may not be limited by FIG. 7A. The communication device may be a stand-alone device or may be part of a larger device. For example, the communication device may be: 1) a stand-alone integrated circuit (IC), or a chip, or a chip system or subsystem; 2) a set of one or more ICs, in which In an implementation, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 7B is a block diagram illustrating a chip 7200 according to an embodiment of the present disclosure. In a case where the communication device 7100 may be a chip or a chip system, reference may be made to the block diagram of the chip 7200 shown in FIG. 7B, but is not limited thereto.

The chip 7200 includes one or more processors 7201, and the processor 7201 is configured to invoke instructions to cause the chip 7200 to perform any of the above methods.

In some embodiments, the chip 7200 also includes one or more interface circuits 7202. In an implementation, the interface circuit 7202 is connected to the memory 7203. The interface circuit 7202 may be used to receive signals from the memory 7203 or other devices, and the interface circuit 7202 may be used to send signals to the memory 7203 or other devices. For example, the interface circuit 7202 may read an instruction stored in the memory 7203 and send the instruction to the processor 7201. In an implementation, terms such as interface circuit, interface, transceiver pin, transceiver and the like may be replaced with each other.

In some embodiments, the chip 7200 further includes one or more memories 7203 for storing instructions. In an implementation, all or part of the memory 7203 may be outside the chip 7200.

The present disclosure further proposes a storage medium on which instructions are stored. When executed on the communication device 7100, the instructions cause the communication device 7100 to perform any of the above methods. In an implementation, the storage medium is an electronic storage medium. In an implementation, the storage medium is a computer-readable storage medium, but it is not limited thereto, and it may also be a storage medium readable by other devices. In an implementation, the storage medium may be a non-transitory storage medium, but it is not limited to this, and it may also be a temporary storage medium.

The present disclosure further provides a program product which, when executed by the communication device 7100, causes the communication device 7100 to perform any of the above methods. In an implementation, the program product is a computer program product.

The present disclosure further provides a computer program that, when run on a computer, causes the computer to perform any of the above methods.

All or some of the above embodiments may be implemented by a software, a hardware, a firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the present disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the present disclosure, but the scope of protection of the present disclosure is not limited thereto. Those skilled in the art familiar to this technical field can easily think of changes or substitutions in the technical scope disclosed by the present disclosure, which shall be covered by the scope of protection of the present disclosure. Therefore, the scope of protection of the present disclosure shall be governed by the scope of protection of the appended claims.

## Claims

1. A method for determination, comprising at least one of:
determining, by a network device, at least one of a first parameter, a second parameter, or a third parameter, wherein the first parameter, the second parameter, and the third parameter are used to calculate a downlink peak data rate of a reduced capability (Redcap) terminal; or
determining, by a network device, at least one of a fourth parameter, a fifth parameter, or a sixth parameter, wherein the fourth parameter, the fifth parameter, and the sixth parameter are used to calculate an uplink peak data rate of a Redcap terminal.

2. The method according to claim 1, wherein the first parameter and the fourth parameter are modulation orders, the second parameter is a maximum number of downlink multiple-input multiple-output (MIMO) layers supported by the Redcap terminal, the fifth parameter is a maximum number of uplink MIMO layers supported by the Redcap terminal, and the third parameter and the sixth parameter are scaling factors.

3. The method according to claim 1 or 2, wherein
reporting types of the first parameter, the second parameter, and the third parameter are mandatory reporting or optional reporting; and
reporting types of the fourth parameter, the fifth parameter, and the sixth parameter are mandatory reporting or optional reporting;
wherein in response to the reporting types of the first parameter, the second parameter, and the third parameter being the mandatory reporting, the first parameter, the second parameter, and the third parameter are reported by the Redcap terminal to the network device;
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

4. The method according to any one of claims 1-3, wherein the Redcap terminal comprises a first release terminal or a second release terminal, wherein a first release precedes a second release.

5. The method according to any one of claims 1-4, wherein determining at least one of the first parameter, the second parameter, or the third parameter comprises:
receiving the first parameter, the second parameter, and the third parameter reported by the Redcap terminal, in response to the reporting types of the first parameter, the second parameter, and the third parameter being the mandatory reporting, and
determining at least one of the fourth parameter, the fifth parameter, or the sixth parameter comprises:
receiving the fourth parameter, the fifth parameter, and the sixth parameter reported by the Redcap terminal, in response to the reporting types of the fourth parameter, the fifth parameter, and the sixth parameter being the mandatory reporting.

6. The method according to any one of claim 4, wherein the Redcap terminal is the second release terminal, and determining at least one of the first parameter, the second parameter, or the third parameter comprises:
in response to the second release terminal reporting any one or two of the first parameter, the second parameter, or the third parameter, determining a parameter not reported by the second release terminal among the first parameter, the second parameter, and the third parameter; or
in response to the second release terminal not reporting the first parameter, the second parameter, and the third parameter, determining the first parameter, the second parameter, and the third parameter,
wherein the first parameter, the second parameter, and the third parameter meet a first condition.

7. The method according to claim 6, wherein the first condition comprises at least one of:
the second release terminal supports a first feature group (FG), and a product of the first parameter, the second parameter, and the third parameter is equal to a first value; or
the second release terminal supports a second FG, and a product of the first parameter, the second parameter, and the third parameter is equal to a second value or a third value, wherein in response to the maximum number of downlink MIMO layers supported by the second release terminal being 1 layer, the product of the first parameter, the second parameter, and the third parameter is equal to the second value, and in response to the maximum number of downlink MIMO layers supported by the second release terminal being 2 layers, the product of the first parameter, the second parameter, and the third parameter is equal to the third value.

8. The method according to claim 7, wherein the first FG is FG 48-1, the second FG is FG 48-2, the first value is 3.2, the second value is 0.75, and the third value is 0.8.

9. The method according to claim 8, wherein the Redcap terminal is the second release terminal, the second release terminal supports the first FG, and determining at least one of the first parameter, the second parameter, or the third parameter comprises at least one of:
in response to the second release terminal not reporting the second parameter, defaulting the second parameter to 1;
in response to the second release terminal not reporting the first parameter, and the second parameter indicating that the maximum number of downlink MIMO layers supported by the second release terminal is 1 layer, determining the first parameter as 4 or 8;
in response to the second release terminal not reporting the third parameter, and the second parameter indicating that the maximum number of downlink MIMO layers supported by the second release terminal is 1 layer, determining the third parameter as 0.8 or 0.4;
in response to the second release terminal not reporting the first parameter, the second parameter indicating that the maximum number of downlink MIMO layers supported by the second release terminal is 2 layers, and the third parameter reported by the second release terminal being 0.4, determining the first parameter as 4;
in response to the second release terminal not reporting the first parameter, the second parameter indicating that the maximum number of downlink MIMO layers supported by the second release terminal is 2 layers, and the third parameter reported by the second release terminal being 0.8, determining the first parameter as 2;
in response to the second release terminal not reporting the first parameter and the third parameter, and the second parameter indicating that the maximum number of downlink MIMO layers supported by the second release terminal is 2 layers, determining the first parameter as 4 and the third parameter as 0.4, or determining the first parameter as 2 and the third parameter as 0.8;
in response to the second release terminal not reporting the third parameter, the second parameter indicating that the maximum number of downlink MIMO layers supported by the second release terminal is 2 layers, and the first parameter reported by the second release terminal being 4, determining the third parameter as 0.4; or
in response to the second release terminal not reporting the third parameter, the second parameter indicating that the maximum number of downlink MIMO layers supported by the second release terminal is 2 layers, and the first parameter reported by the second release terminal being 2, determining the third parameter as 0.8.

10. The method according to claim 8, wherein the Redcap terminal is the second release terminal, the second release terminal supports the second FG, and determining at least one of the first parameter, the second parameter, or the third parameter comprises at least one of:
in response to the second release terminal not reporting the first parameter, determining the first parameter as 1;
in response to the second release terminal not reporting the second parameter, determining the second parameter as 1;
in response to the second release terminal not reporting the third parameter, and the second parameter indicating that the maximum number of downlink MIMO layers supported by the second release terminal is 1 layer, determining the third parameter as 0.75; or
in response to the second release terminal not reporting the third parameter, and the second parameter indicating that the maximum number of downlink MIMO layers supported by the second release terminal is 2 layers, determining the third parameter as 0.4.

11. The method according to any one of claims 1-4, wherein the Redcap terminal is the first release terminal, the first release terminal is in an FR1 band, and determining at least one of the first parameter, the second parameter, or the third parameter comprises:
in response to the first release terminal not reporting the first parameter, and the first release terminal reporting that 256 quadrature amplitude modulation (QAM) is supported, determining the first parameter as the 256QAM; otherwise, determining the first parameter as 64QAM; or
in response to the first release terminal not reporting the first parameter, determining the first parameter as 64QAM.

12. The method according to any one of claims 4-11, wherein the Redcap terminal is the second release terminal, and determining at least one of the fourth parameter, the fifth parameter, or the sixth parameter comprises at least one of:
determining the fifth parameter; or
in response to the second release terminal not reporting the fourth parameter and/or the sixth parameter, determining the fourth parameter and/or the sixth parameter based on the second parameter, wherein the second parameter, the fourth parameter, and the sixth parameter meet a second condition, or determining the fourth parameter and/or the sixth parameter based on the fifth parameter, wherein the fourth parameter, the fifth parameter, and the sixth parameter meet a third condition.

13. The method according to claim 12, wherein determining the fifth parameter comprises at least one of:
in response to the second release terminal not reporting the fifth parameter, defaulting the fifth parameter to 1;
in response to the second release terminal reporting the fifth parameter indicating that the maximum number of uplink MIMO layers is 1 layer, determining the fifth parameter as 1; or
in response to the second release terminal reporting the second parameter indicating that the maximum number of downlink MIMO layers is 2 layers, determining the fifth parameter as 2.

14. The method according to claim 12, wherein the second condition comprises at least one of:
the second release terminal supports the first FG, and a product of the second parameter, the fourth parameter, and the sixth parameter is equal to the first value; or
the second release terminal supports the second FG, and a product of the second parameter, the fourth parameter, and the sixth parameter is equal to the second value or the third value, wherein in response to the second parameter indicating that the maximum number of downlink MIMO layers supported by the second release terminal is 1 layer, the product of the second parameter, the fourth parameter, and the sixth parameter is equal to the second value, and in response to the second parameter indicating that the maximum number of downlink MIMO layers supported by the second release terminal is 2 layers, the product of the second parameter, the fourth parameter, and the sixth parameter is equal to the third value.

15. The method according to claim 12, wherein the third condition comprises at least one of:
the second release terminal supports the first FG, and a product of the fourth parameter, the fifth parameter, and the sixth parameter is equal to the first value; or
the second release terminal supports the second FG, and a product of the fourth parameter, the fifth parameter, and the sixth parameter is equal to the second value, wherein in response to the fifth parameter indicating that the maximum number of uplink MIMO layers supported by the second release terminal is 1 layer, the product of the fourth parameter, the fifth parameter, and the sixth parameter is equal to the second value.

16. The method according to any one of claims 1-4, wherein the Redcap terminal is the first release terminal, the first release terminal is in an FR1 band, and determining at least one of the fourth parameter, the fifth parameter, or the sixth parameter comprises:
in response to the first release terminal not reporting the fourth parameter, and the first release terminal supporting 256QAM, determining the first parameter as the 256QAM; otherwise, determining the fourth parameter as 64QAM; or
in response to the first release terminal not reporting the fourth parameter, determining the fourth parameter as 64QAM.

17. A method for determination, comprising at least one of:
reporting, by a reduced capability (Redcap) terminal, at least one of a first parameter, a second parameter, or a third parameter to a network device, wherein the first parameter, the second parameter, and the third parameter are used to calculate a downlink peak data rate of the Redcap terminal; or
reporting, by a Redcap terminal, at least one of a fourth parameter, a fifth parameter, or a sixth parameter to a network device, wherein the fourth parameter, the fifth parameter, and the sixth parameter are used to calculate an uplink peak data rate of the Redcap terminal.

18. The method according to claim 17, wherein the first parameter and the fourth parameter are modulation orders, the second parameter is a maximum number of downlink multiple-input multiple-output (MIMO) layers supported by the Redcap terminal, the fifth parameter is a maximum number of uplink MIMO layers supported by the Redcap terminal, and the third parameter and the sixth parameter are scaling factors.

19. The method according to claim 17 or 18, wherein reporting types of the first parameter, the second parameter, and the third parameter are mandatory reporting or optional reporting; and reporting types of the fourth parameter, the fifth parameter, and the sixth parameter are mandatory reporting or optional reporting;
wherein in response to the reporting types of the first parameter, the second parameter, and the third parameter being the mandatory reporting, the first parameter, the second parameter, and the third parameter are reported by the Redcap terminal to the network device;
in response to the reporting type of at least one of the first parameter, the second parameter, or the third parameter being the optional reporting, at least one of the first parameter, the second parameter, or the third parameter is reported by the Redcap terminal to the network device, or at least one of the first parameter, the second parameter, or the third parameter is not reported by the Redcap terminal to the network device;
in response to the reporting types of the fourth parameter, the fifth parameter, and the sixth parameter being the mandatory reporting, the fourth parameter, the fifth parameter, and the sixth parameter are reported by the Redcap terminal to the network device; or
in response to the reporting type of at least one of the fourth parameter, the fifth parameter, or the sixth parameter being the optional reporting, at least one of the fourth parameter, the fifth parameter, or the sixth parameter is reported by the Redcap terminal to the network device, or at least one of the fourth parameter, the fifth parameter, or the sixth parameter is not reported by the Redcap terminal to the network device.

20. The method according to any one of claims 17-19, wherein the Redcap terminal comprises a first release terminal or a second release terminal, wherein a first release precedes a second release.

21. A communication method, performed by a communication system comprising a network device and a terminal, the method comprising at least one of:
reporting, by a reduced capability (Redcap) terminal, at least one of a first parameter, a second parameter, or a third parameter to the network device, wherein the first parameter, the second parameter, and the third parameter are used to calculate a downlink peak data rate of the Redcap terminal;
reporting, by a Redcap terminal, at least one of a fourth parameter, a fifth parameter, or a sixth parameter to the network device, wherein the fourth parameter, the fifth parameter, and the sixth parameter are used to calculate an uplink peak data rate of the Redcap terminal;
determining, by the network device, at least one of a first parameter, a second parameter, or a third parameter, wherein the first parameter, the second parameter, and the third parameter are used to calculate a downlink peak data rate of a Redcap terminal;
determining, by the network device, at least one of a fourth parameter, a fifth parameter, or a sixth parameter, wherein the fourth parameter, the fifth parameter, and the sixth parameter are used to calculate an uplink peak data rate of a Redcap terminal;
calculating, by the network device, a downlink peak data rate of a Redcap terminal based on a first parameter, a second parameter, and a third parameter;
calculating, by the network device, an uplink peak data rate of a Redcap terminal based on a fourth parameter, a fifth parameter, and a sixth parameter; or
scheduling, by the network device, a resource for a Redcap terminal based on a calculated downlink peak data rate and/or uplink peak data rate.

22. A network device, comprising at least one of:
a processing module, configured to determine at least one of a first parameter, a second parameter, or a third parameter, wherein the first parameter, the second parameter, and the third parameter are used to calculate a downlink peak data rate of a reduced capability (Redcap) terminal; or
a processing module, configured to determine at least one of a fourth parameter, a fifth parameter, or a sixth parameter, wherein the fourth parameter, the fifth parameter, and the sixth parameter are used to calculate an uplink peak data rate of a Redcap terminal.

23. A reduced capability (Redcap) terminal, comprising at least one of:
a sending module, configured to report at least one of a first parameter, a second parameter, or a third parameter to a network device, wherein the first parameter, the second parameter, and the third parameter are used to calculate a downlink peak data rate of the Redcap terminal; or
a sending module, configured to report at least one of a fourth parameter, a fifth parameter, or a sixth parameter to a network device, wherein the fourth parameter, the fifth parameter, and the sixth parameter are used to calculate an uplink peak data rate of the Redcap terminal.

24. A communication device, comprising:
one or more processors,
wherein the one or more processors are configured to invoke instructions to cause the communication device to perform the method for determination according to any one of claims 1-16, or 17-20.

25. A communication system, comprising a terminal and a network device, wherein the network device is configured to implement the method for determination according to any one of claims 1-16, and the terminal is configured to implement the method for determination according to any one of claims 17-20.

26. A storage medium storing instructions that, when executed on a communication device, cause the communication device to perform the method for determination according to any one of claims 1-16, or 17-20.
